# EUROPEAN PATENT APPLICATION

(11) **EP 4 412 036 A1**
(43) Date of publication of application: **07.08.2024**
(21) Application number: 21958692.2
(22) Date of filing: 28.09.2021
(51) Int. Cl.: H02J 50/80, H02J 50/00, H04W 52/00

(54) **INFORMATION TRANSMISSION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); ZHANG, Zhi, Dongguan, Guangdong 523860 (CN)
(74) Representative: Taor, Simon Edward William
(86) International application number: PCT/CN2021/121473
(87) International publication number: WO 2023/050097

(57) **Abstract**

The present application relates to the technical field of communications. Disclosed are an information transmission method and apparatus, and a device and a storage medium. The method comprises: a network device sending first indication information to an energy supply device, wherein the first indication information is used for indicating a configuration related to an energy supply signal, and the energy supply signal is used for supplying energy to a zero-power terminal. In the present application, by means of using the network device to indicate, to the energy supply device, the configuration related to the energy supply signal, the energy supply device sends the energy supply signal to the zero-power terminal by means of the indicated configuration, such that the energy supply device supplies energy to the zero-power terminal. Since the energy supply device may be flexibly deployed in a communication system, using the energy supply device to supply energy to the zero-power terminal may increase the coverage distance of zero-power communication, and also make the zero-power communication more flexible.

## Description

### TECHNICAL FIELD

The present disclosure relates to the technical field of communications, and more particularly to an information transmission method, an information transmission apparatus, a device and a storage medium.

### BACKGROUND

IOT (Internet of Things) devices usually need to meet requirements of light volume, stable operating state and low maintenance cost and the like. Therefore, in the design process of the IOT devices, adoption of technologies of low-power communication is a trend of scientific and technological development.

The technologies of the low-power communication include: communication technology based on Narrow Band Internet of Things (NB-IOT), communication technology based on Bluetooth Low Energy (BLE), and communication technology based on passive Radio Frequency Identification (RFID). Successful progress has been made in the NO-IOT and BLE in recent years. Node devices designed for the communication technology based on NB-IOT and the communication technology based on BLE usually have a service life of 3 to 10 years. The node devices designed for the communication technology based on passive RFID do not need batteries at all. In theory, the node devices designed for the communication technology based on passive RFID may be used for a long time without external physical damage. At the same time, since the node devices designed for the communication technology based on passive RFID do not need batteries, the node devices can be designed to be thinner and lighter, so that the maintenance cost can be reduced.

However, even if node devices can work without batteries based on technologies of the low-power communication, these node devices still need to be powered on to have signal interaction with the outside world. Therefore, how to supply power to these node devices needs further discussion and research.

### SUMMARY

Embodiments of the present disclosure provide an information transmission method, an apparatus, a device and a storage medium. The technical solutions are as follows.

In one aspect, an embodiment of the present disclosure provides an information transmission method applied to a network device, which includes the following operation.

First indication information is sent. The first indication information is configured to indicate configuration related to a power supply signal, and the power supply signal is configured to supply power to a zero-power terminal.

In another aspect, an embodiment of the present disclosure provides an information transmission method applied to a power supply device, which includes the following operation.

First indication information is received. The first indication information is configured to indicate configuration related to a power supply signal, and the power supply signal is configured to supply power to a zero-power terminal.

In yet another aspect, an embodiment of the present disclosure provides an information transmission apparatus, which is provided in a network device. The apparatus includes a first sending module.

The first sending module is configured to send first indication information. The first indication information is configured to indicate configuration related to a power supply signal, and the power supply signal is configured to supply power to a zero-power terminal.

In still another aspect, an embodiment of the present disclosure provides an information transmission apparatus, which is provided in a power supply device. The apparatus includes a first receiving module.

The first receiving module is configured to receive first indication information. The first indication information is configured to indicate configuration related to a power supply signal, and the power supply signal is configured to supply power to a zero-power terminal.

In still another aspect, an embodiment of the present disclosure provides a network device, which includes a processor and a transceiver connected to the processor.

The transceiver is configured to send first indication information. The first indication information is configured to indicate configuration related to a power supply signal, and the power supply signal is configured to supply power to a zero-power terminal.

In still another aspect, an embodiment of the present disclosure provides a power supply device, which includes a processor and a transceiver connected to the processor.

The transceiver is configured to receive first indication information. The first indication information is configured to indicate configuration related to a power supply signal, and the power supply signal is configured to supply power to a zero-power terminal.

In still another aspect, an embodiment of the present disclosure provides a computer-readable storage medium, having stored thereon a computer program that is configured to be executed by a processor of a network device to implement the above-mentioned information transmission method on a network device side.

In still another aspect, an embodiment of the present disclosure provides a computer-readable storage medium, having stored thereon a computer program that is configured to be executed by a processor of a power supply device to implement the above-mentioned information transmission method on a terminal side.

In another aspect, an embodiment of the present disclosure provides a chip including a programmable logic circuit and/or program instructions that, when the chip runs on a network device, implements the above-mentioned information transmission method on a network device side.

In another aspect, an embodiment of the present disclosure provides a chip including a programmable logic circuit and/or program instructions that, when the chip runs on a power supply device, implements the above-mentioned information transmission method on a power supply device side.

In another aspect, an embodiment of the present disclosure provides a computer program product that, when running on a network device, implements the above-mentioned information transmission method on a network device side.

In another aspect, an embodiment of the present disclosure provides a computer program product that, when running on a power supply device, implements the above-mentioned information transmission method on a power supply device side.

The technical solutions provided by the embodiments of the present disclosure may include the following beneficial effects.

A network device sends configuration related to a power supply signal to a power supply device, so that the power supply device subsequently transmits the power supply signal to a zero-power terminal through the indicated configuration, thereby realizing the power supply to the zero-power terminal through the power supply device. Moreover, the power supply device can be flexibly deployed in a communication system, so that a coverage distance of zero-power communication can be improved by supplying power to the zero-power terminal through the power supply device, and at the same time, the zero-power communication is more flexible.

### BRIEF DESCRIPTION OF THE DRAWINGS

In order to more clearly explain the technical solutions in the embodiments of the present disclosure, the drawings to be used in the description of the embodiments would be briefly introduced below. It is apparent that the drawings described below are only some embodiments of the present disclosure, and those of ordinary skill in the art can obtain other drawings from these drawings without creative effort.
FIG. 1 is a diagram of system architecture of a low-power communication system according to an embodiment of the present disclosure.
FIG. 2 is a diagram of a radio frequency power harvesting circuit according to an embodiment of the present disclosure.
FIG. 3 is a diagram of a back scattering communication circuit according to an embodiment of the present disclosure.
FIG. 4 is a diagram of a resistance modulation circuit according to an embodiment of the present disclosure.
FIG. 5 is a diagram of Non-Return-to-Zero code according to an embodiment of the present disclosure.
FIG. 6 is a diagram of Manchester coding according to an embodiment of the present disclosure.
FIG. 7 is a diagram of Unipolar coding according to an embodiment of the present disclosure.
FIG. 8 is a diagram of Differential Binary Phase coding according to an embodiment of the present disclosure.
FIG. 9 is a diagram of a Miller coding according to an embodiment of the present disclosure.
FIG. 10 is a diagram of system architecture of a low-power communication system according to another embodiment of the present disclosure.
FIG. 11 is a diagram of system architecture of a low-power communication system according to yet another embodiment of the present disclosure.
FIG. 12 is a flowchart of an information transmission method according to an embodiment of the present disclosure.
FIG. 13 is a flowchart of an information transmission method according to another embodiment of the present disclosure.

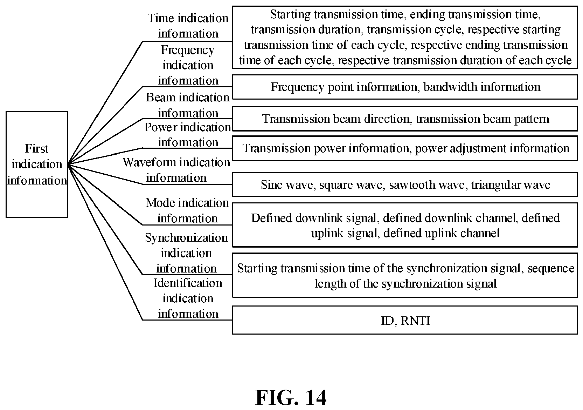

FIG. 14 is a diagram of first indication information according to an embodiment of the present disclosure.
FIG. 15 is a block diagram of an information transmission apparatus according to an embodiment of the present disclosure.
FIG. 16 is a block diagram of an information transmission apparatus according to an embodiment of the present disclosure.
FIG. 17 is a block diagram of an information transmission apparatus according to an embodiment of the present disclosure.
FIG. 18 is a block diagram of an information transmission apparatus according to an embodiment of the present disclosure.
FIG. 19 is a structural diagram of a network device according to an embodiment of the present disclosure.
FIG. 20 is a structural diagram of a power supply device according to an embodiment of the present disclosure.

### DETAILED DESCRIPTION

In order to make the object, technical solutions and advantages of the present disclosure clearer, the embodiments of the present disclosure would be described in further detail below with reference to the accompanying drawings.

The network architecture and service scenario described in the embodiments of the present disclosure are intended to more clearly explain the technical solutions of the embodiments of the present disclosure, and do not constitute a limitation to the technical solutions provided by the embodiments of the present disclosure. Those skilled in the art can be aware of that with the evolution of the network architecture and the emergence of new service scenarios, the technical solutions provided by the embodiments of the present disclosure are equally applicable to similar technical problems.

Before introducing the technical solutions provided by the present disclosure, the zero-power communication and the zero-power terminal related to the embodiments of the present disclosure are introduced and explained first.

### Firstly, Technical Principle of Zero-power Communication

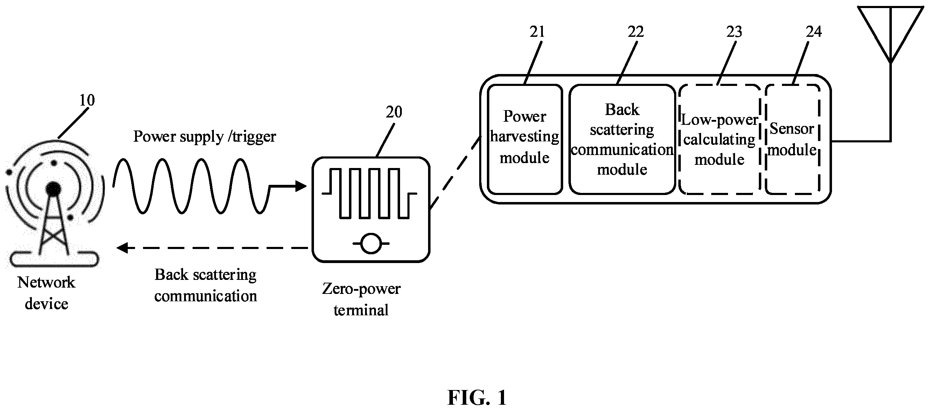

Referring to FIG. 1, an exemplary communication system for zero-power communication includes a network device 10 and a zero-power terminal 20. The network device 10 is configured to transmit a wireless power supply signal and a downlink communication signal to the zero-power terminal 20 and receive a back scattering signal from the zero-power terminal 20. The zero-power terminal 20 may include a power harvesting module 21, a back scattering communication module 22 and a low-power calculating module 23. Optionally, as illustrated in FIG. 1, the zero-power terminal 20 may further include a memory module (not illustrated in FIG. 1) and a sensor module 24. The memory module is configured to store some basic information, such as an item identifier or the like, and the sensor module 24 is configured to acquire sensing data, such as ambient temperature and ambient humidity.

It can be seen that key technologies of the zero-power communication mainly include the RF power harvesting and the back scattering communication. These two key technologies are introduced and explained respectively below.

### 1. RF Power Harvesting

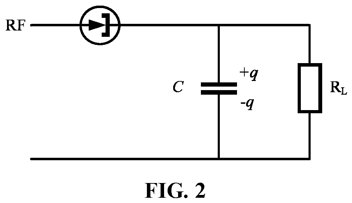

Referring to FIG. 2, the power harvesting module realizes the harvesting of space electromagnetic wave power based on the principle of electromagnetic induction, thereby obtaining the power required to drive the zero-power terminal to work. For example, the power harvested by the power harvesting module can be used to drive a low-power demodulation and modulation module (low-power calculating module) and the sensor module, and can be used for memory reading. Therefore, the zero-power terminal does not need power provided by the conventional battery.

### 2. Back Scattering Communication

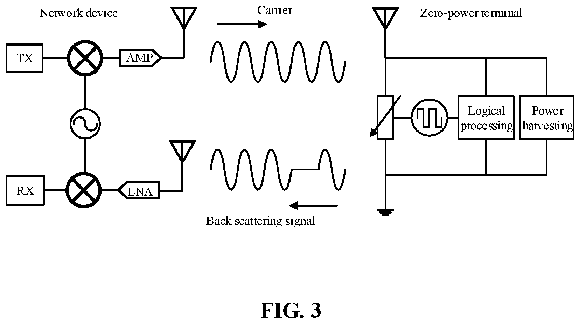

Referring to FIG. 3, the zero-power terminal receives wireless signals sent by the network device, and can modulate the wireless signals, load the information to be sent and radiate the modulated wireless signals from the antenna. This information transmission process can be referred to as back scattering communication.

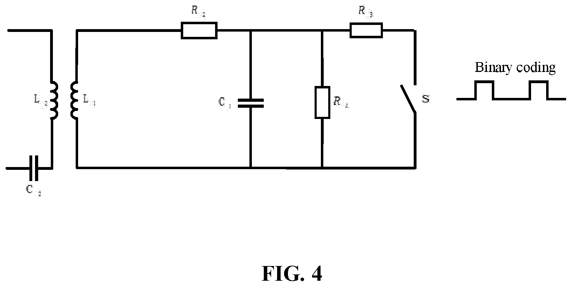

The back scattering and load modulation are inseparable. The load modulation refers to completing a modulation process by adjusting and controlling the circuit parameters of the oscillation loop of the zero-power terminal according to the beat of the data stream to change parameters such as the size of impedance of the electronic tag accordingly. In an example, the load modulation includes resistance load modulation and capacitance load modulation. Referring to FIG. 4, in the resistance load modulation, a load is connected in parallel with a resistor, and the resistor is switched on or switched off based on the control of a binary data stream. The switching on and off of the resistor would lead to the change of circuit voltage, so that Amplitude-Shift Keying (ASK) modulation can be realized. That is, the resistance load modulation realizes signal modulation and transmission by adjusting the amplitude of the back scattering signal of the zero-power terminal. Similarly, in the capacitance load modulation, the resonant frequency of the circuit can be changed by the switching on and of the capacitor, so that Frequency-Shift Keying (FSK) modulation can be realized. That is, the capacitance load modulation realizes the signal modulation and transmission by adjusting the operating frequency of the back scattering signal of the zero-power terminal.

It can be seen that the zero-power terminal modulates incoming signals by means of the load modulation, thereby realizing the back scattering communication process. Therefore, the zero-power terminal has at least the following advantages.
(1) The zero-power terminal does not actively transmit signals, and thus does not need complex RF links, such as RF filters.
(2) The zero-power terminal does not need to actively generate high-frequency signals, and thus does not need high-frequency crystal oscillators.
(3) By means of back scattering communication, the transmission of the signals does not need to consume the power of the zero-power terminal itself.

### Secondly, Coding Modes of Zero-power Communication

With respect to the data transmitted by the electronic tag, binary "1" and "0" can be represented using different forms of codes. That is, different pulse signals can be used to represent "1" and "0". In an example, coding modes commonly used in the RFID technology include: the Non-Return-to-Zero (NRZ) code, the Manchester coding, the Unipolar Return-to-zero (RZ) coding, the Differential Binary Phase (DBP) coding, the Miller coding, and the Differential coding. These coding methods are introduced and explained respectively below.

### 1. Non-Return-to-Zero code

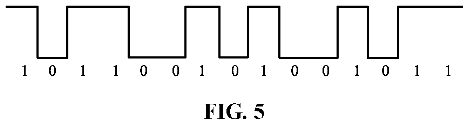

Referring to FIG. 5, the Non-Return-to-Zero code uses high level to represent binary "1" and uses low level to represent binary "0".

### 2. Manchester Coding

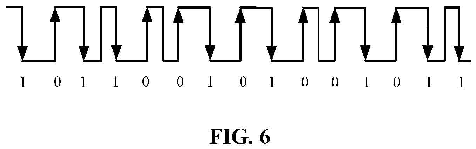

The Manchester coding can also be called Split-Phase coding. In the Manchester coding, a value of a certain bit is represented by a level change (rise/fall) at half of the bit period within the bit length. Referring to FIG. 6, a negative jumping at half of the bit period represents the binary "1" and a positive jumping at half of the bit period represents the binary "0". In the load modulation or back scattering modulation of the carrier, the Manchester coding is usually used for data transmission from the electronic tag to reader, which is beneficial to find data transmission errors. This is because the state where the level does not change within a bit length is not allowed for the Manchester coding. When data bits transmitted simultaneously by multiple electronic tags have different values, the received rising edge and falling edge cancel each other out, resulting in an uninterrupted carrier signal throughout the entire bit length. Since this state is not allowed, the reader can use this error to determine the specific position where the collision occurs.

### 3. Unipolar RZ Coding

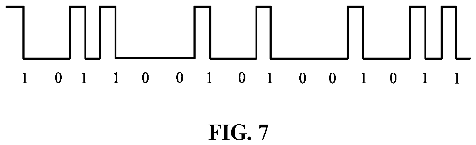

Referring to FIG. 7, the high level of the Unipolar RZ coding at a first half of the bit period represents the binary "1", while the low level lasting the whole bit period represents the binary "0". Therefore, the Unipolar RZ coding can be used to extract bit synchronization signals.

### 4. Differential Binary Phase Coding

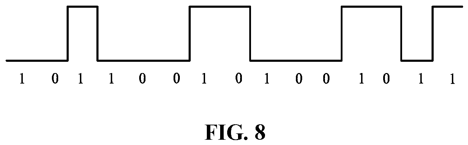

Referring to FIG. 8, any edge of the differential Binary Phase coding at half of the bit period represents the binary "0", whereas no edge represents the binary "1". In addition, at the beginning of each bit period, the level is inverted. Therefore, it is easier for the receiver to reconstruct the bit beat.

### 5. Miller Coding

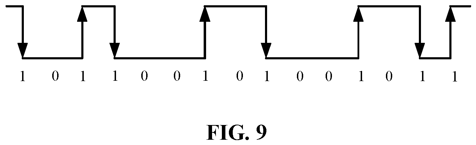

Referring to FIG. 9, any edge of the Miller coding at half of the bit period represents the binary "1", whereas a constant level through the next bit period represents the binary "0", and level alternates0 at the beginning of the bit period. Therefore, it is easier for the receiver to reconstruct the bit beat.

### 6. Differential Coding

In differential coding, each binary "1" to be transmitted would cause a change in the signal level, whereas for the binary "0", the signal level would remain unchanged.

### Thirdly, Application Scenarios of the Zero-power Communication

The zero-power communication can be widely used in all walks of life because of its significant advantages such as extremely low cost, zero-power consumption and small size. For example, the zero-power communication can be applied to logistics, intelligent warehousing, smart agriculture, energy and power, industrial Internet, and the like for vertical industries. The zero-power communication may also be applied to personal applications such as smart wearable and smart home.

### Fourthly, Zero-power Terminal

Based on power sources and usage modes of the zero-power terminal, the zero-power terminal may be divided into the following types: the passive zero-power terminal, the semi-passive zero-power terminal and the active zero-power terminal. These types of zero-power terminals are introduced and explained respectively below.

### 1. Passive Zero-power Terminal

The passive zero-power terminal does not need a built-in battery. When approaching the network device, the zero-power terminal is within the near-field range formed by the radiation of the antenna of the network device. At this time, an antenna of the passive zero-power terminal generates an induced current through electromagnetic induction, and the induced current can drive the low-power chip circuit of the passive zero-power terminal, so that demodulation of the forward link signal and modulation of the backward link signal can be realized. For the back scattering link, the passive zero-power terminal performs the signal transmission by means of the back scattering.

It can be seen that neither the forward link nor the backward link of the passive zero-power terminal needs to be driven by the built-in batter, and the passive zero-power terminal is a true zero-power terminal. In addition, since the passive zero-power terminal does not need the battery, the RF circuit and the baseband circuit of the passive zero-power terminal are very simple. The passive zero-power terminal does not need a Low Noise Amplifier (LNA), a Power Amplifier (PA), a crystal oscillator, an Analog-to-Digital Converter (ADC) or the like, and thus has many advantages, such as small size, light weight, low cost and long service life.

### 2. Semi-passive zero-power Terminal

The semi-passive zero-power terminal itself is not installed with conventional batteries, but can use an RF power harvesting module to harvest radio wave power and store the harvested power in a power storage unit (such as, a capacitor). After the power storage unit obtains power, the low-power chip circuit of the semi-passive zero-power terminal can be driven, so that demodulation of the forward link signal and modulation of the backward link signal can be realized. For the back scattering link, the semi-passive zero-power terminal performs the signal transmission by means of the back scattering.

It can be seen that neither the forward link nor the backward link of the semi-passive zero-power terminal needs to be driven by the built-in batter. Although the power storage unit is used during the operation, the power is from the radio power harvested by the power harvesting module. Therefore, the semi-passive zero-power terminal is also a true zero-power terminal. The semi-passive zero-power terminal inherits various advantages of the passive zero-power terminal, and thus has advantages such as small size, light weight, low cost and long service life.

### 3. Active Zero-power Terminal

A zero-power terminal used in some scenarios can also be an active zero-power terminal, which can have the built-in battery. The battery is used to drive a low-power chip circuit of the active zero-power terminal, so that demodulation of the forward link signal and modulation of the backward link signal can be realized. For the back scattering link, the passive zero-power terminal performs the signal transmission by means of the back scattering. Therefore, the zero-power of the active zero-power terminal is mainly reflected in the fact that the signal transmission on the backward link does not need the power of the terminal itself, but uses the method of back scattering.

The active zero-power terminal supplies power to the RFID chip through the built-in battery, so as to increase the reading and writing distance of the tag and improve the reliability of communication. Therefore, the active zero-power terminal can be applied in some scenarios with relatively high requirements on communication distance and reading delay.

It should be understood that the zero-power terminal described in the following embodiments may include one or more of the above-mentioned zero-power terminals, which are collectively referred to as the zero-power terminal in the following embodiments for ease of description.

As can be seen from the above embodiments, the zero-power terminal can perform communication only after obtaining power based on the wireless power supply mode. Therefore, before communicating with the zero-power terminal, the network device needs to ensure that the zero-power terminal receives a power supply signal for wireless power supply and obtains wireless power through power harvesting.

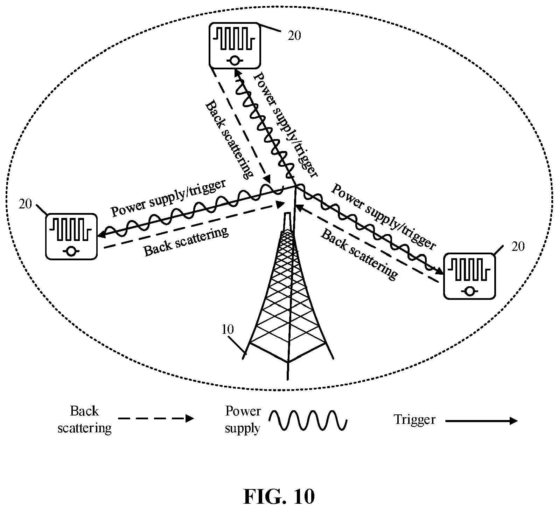

In an example, a network device may transmit a power supply signal to a zero-power terminal. Referring to FIG. 10, the network device 10 transmits the power supply signal to the zero-power terminal 20. That is, the network device 10 not only communicates with the zero-power terminal 20 but also provides the power supply signal to the zero-power terminal 20. However, supplying power through the network device may have the following disadvantages.
(1) The network coverage of the network device is limited. This is because in a case that the power is directly supplied by the network device, when the power supply signal transmitted by the network device reaches the zero-power terminal, the power supply signal would be attenuated rapidly because of the path loss with the increase of distance. The zero-power terminal can harvest enough power to maintain normal operation only when the zero-power terminal receives a strong enough power supply signal (for example, the power supply signal needs to be greater than-20dBmw (decibel milliwatt). Therefore, the direct power supply from the network device would lead to limited downlink coverage, which is generally only about 100 meters.
(2) If the zero-power terminal works in the Time Division Duplexing (TDD) frequency band, the network device cannot receive the Uplink (UL) signal from the zero-power terminal while transmitting the power supply signal. This is because generally speaking, the the network device cannot perform transmission and reception on the same carrier at the same time. Therefore, it is difficult for the method of direct power supply from the network device to support the zero-power communication in the TDD frequency band.

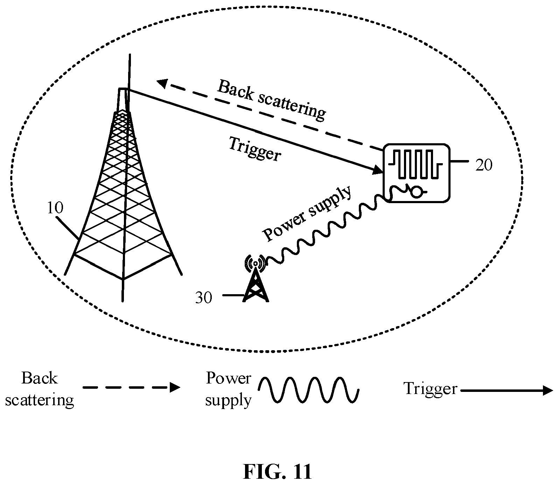

In another example, there are various network nodes in a wireless cellular network, such as smart phones, Relay nodes, Customer Premise Equipment (CPE), etc., which can also be used to supply power to the zero-power terminal. Even a dedicated network node (such as a base station, etc.,) can be deployed to supply power to the zero-power terminal. In the embodiments of the present disclosure, the network nodes that supply power to the zero-power terminal are collectively referred to as the power supply device. Referring to FIG. 11, the power supply signal from the power supply device 30 can also be used for wireless power supply.

It can be seen that by deploying the power supply device around the zero-power terminal and using the power supply device for wireless power supply, the coverage distance of the zero-power communication can be significantly improved, and the zero-power communication can also be more flexible. However, how to support a variety of network nodes (power-supplying devices) in the wireless cellular network to provide wireless power to the zero-power terminal in a reasonable and efficient way is an urgent technical problem to be solved. Based on this, embodiments of the present disclosure provide an information transmission method, which can be used to solve the technical problem. The technical solutions provided by the present disclosure would be introduced and explained through several embodiments below.

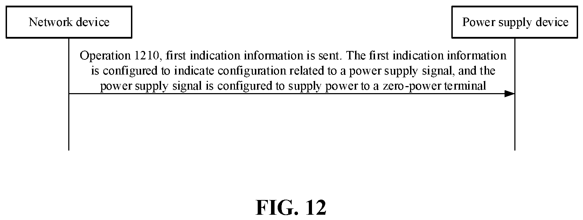

Referring to FIG. 12, a flowchart of an information transmission method according to an embodiment of the present disclosure is illustrated. The method may be applied to the zero-power communication system illustrated in FIG. 11, and may include at least some of the following operations.

In the operation 1210, the network device sends first indication information to the power supply device. The first indication information is configured to indicate configuration related to a power supply signal, and the power supply signal is configured to supply power to a zero-power terminal.

In the embodiment of the present disclosure, power is supplied to the zero-power terminal through the power supply device. In an example, the power supply device may reuse communication nodes in the communication system, such as smart phones, relay nodes, CPEs, etc. The power supply device may also be a dedicated power supply node in the communication system, such as a dedicated base station, etc. The embodiment of the present disclosure does not limit the implementation mode of the power supply device. In an example, the zero-power terminal may be either a passive zero-power terminal, a semi-passive zero-power terminal, or an active zero-power terminal, which is not limited by the embodiment of the present disclosure. Reference can be made to the above-mentioned embodiments for other explanation about the power supply device, the zero-power terminal and the like, which would not be repeated here.

In order to enable the power supply device to supply power to the zero-power terminal in a reasonable and efficient way, in the embodiments of the present disclosure, the network device sends the first indication information to the power supply device, and the first indication information is configured to indicate the configuration related to the power supplying signal. The power supply device can subsequently transmit the power supplying signal to the zero-power terminal according to the configuration indicated by the first indication information, so as to supply power to the zero-power terminal. Reference can be made to the following embodiments for description of the content of the first indication information, the configuration related to the power supply signal and the like, which would not be repeated here.

The embodiment of the present disclosure does not limit the transmission method of the first indication information. Optionally, the network device may send the first indication information to the power supply device by using Radio Resource Control (RRC) signaling, so that the power supply device can obtain detailed configuration information. Alternatively, the network device may send the first indication information to the power supply device by using dynamic signaling (such as Downlink Control Information (DCI), etc.), so that the network device can flexibly and timely send or update the configuration related to the power supply signal, thereby adapting to the dynamic change characteristics of the zero-power communication service. Alternatively, the network device may send the first indication information to the power supply device by using both the RRC signaling and the dynamic signaling. For example, part of the content of the first indication information is sent through the RRC signaling, part of the content of the first indication information is sent through the dynamic signaling. For another example, initial content of the first indication information is sent through the RRC signaling, and the updated content of the first indication information is sent through the dynamic signaling, etc. Based on this, the first indication information is carried in at least one of information: RRC signaling, Media Access Control Control Element (MAC CE) or DCI. Reference can be made to the following embodiments for other sending methods of the first indication information, which would not be repeated here.

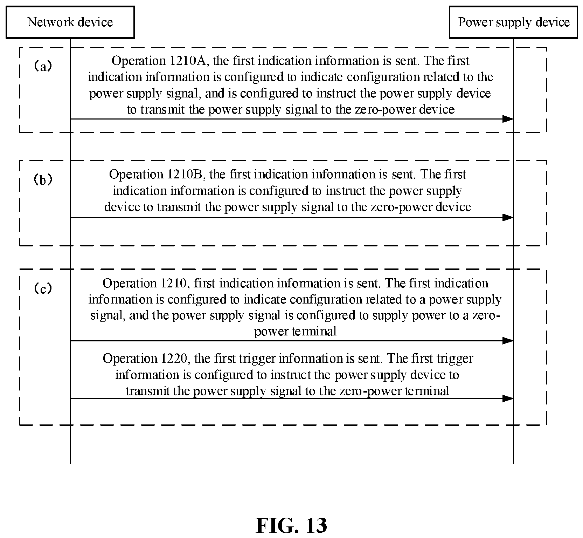

In order to supply power to the zero-power terminal, the network device also needs to trigger the power supply device to transmit the power supply signal to the zero-power terminal. In an example, the network device may indicate the configuration related to the power supply signal and trigger the transmission of the power supply signal by using the same signaling. Alternatively, the network device directly triggers the transmission of the power supply signal, and the configuration related to the power supply signal is predefined by the communication protocol or preconfigured by the network device. Based on this, as illustrated in FIG. 13(a), the above operation 1210 may be implemented as an operation 1210A which includes the operation that the network device sends first indication information to the power supply device. The first indication information is configured to indicate configuration related to the power supply signal, and is configured to instruct the power supply device to transmit the power supply signal to the zero-power device. Alternatively, as illustrated in FIG. 13(b), the above operation 1210 may be implemented as an operation 1210B which includes the operation that the network device sends first indication information to the power supply device. The first indication information is configured to instruct the power supply device to transmit the power supply signal to the zero-power device. In another example, the network device may indicate the configuration related to the power supply signal and trigger the transmission of the power supply signal by using different signaling. Based on this, as illustrated in FIG. 13(c), the above operation 1210 is followed by an operation 1220 which includes the operation that the network device sends the first trigger information. The first trigger information is configured to instruct the power supply device to transmit the power supply signal to the zero-power terminal.

Due to different RRC states of power supply devices, the methods of interacting information and signaling between the power supply devices and the network device may also be different. In order to ensure that the power supply device can receive the triggering from the network device in any RRC states, the embodiments of the present disclosure provide different transmission methods of the first indication information/the first trigger information according to the different RRC states of the power supply device.

In an example, when the power supply device is in an RRC idle state or an RRC inactive state, the first trigger information is carried in any one of: DCI for scheduling a Physical Downlink Shared Channel (PDSCH) carrying a paging message, or the PDSCH carrying the paging message. Alternatively, when the power supply device is in the RRC idle state or the RRC inactive state, the first indication information is carried in any one of: the DCI for scheduling the PDSCH carrying the paging message, or the PDSCH carrying the paging message.

When the power supply device is in the RRC idle state or the RRC inactive state, the power supply device, as a network node, can still monitor paging, so that the network device can trigger the power supply device to transmit the power supply signal through paging. Based on this, the first trigger information or the first indication information can be carried in any one of: the DCI for scheduling the PDSCH carrying the paging message, or the PDSCH carrying the paging message. For example, a bit configured to indicate whether to transmit the power supply signal is added to the DCI for scheduling the PDSCH carrying the paging message.

Optionally, the PDSCH carrying the paging message carries a paging record list, and the paging record list includes at least one device identifier of at least one device to be paged. The first trigger information or the first indication information is further configured to indicate the power supply device, which transmits the power supply signal to the zero-power terminal, of the at least one device to be paged. For example, based on a number of devices to be paged included in the paging record list, a bit map may be transmitted in the PDSCH, and each bit in the bit map indicates whether a respective device to be paged corresponding to the bit in the paging record list transmits the power supply signal. The device to be paged that transmits the power supply signal in the paging record list can be called the power supply device, and the device to be paged that does not transmit the power supply signal in the paging record list is the traditional device. In the embodiment of the present disclosure, different power supply devices can use different power supply signals to supply power to the zero-power terminal. Based on this, optionally, the first trigger information or the first indication information is further configured to indicate an index of the power supply signal. That is, for each power supply device that needs to transmit the power supply signal, a respective index of the power supply signal adopted by the power supply device when supplying power to the zero-power terminal can also be indicated. Alternatively, a bit sequence of indexes of the power supply signals is consistent with a bit sequence of power supply devices that need to transmit the power supply signals.

Exemplarily, if the number of devices to be paged included in the paging record list is ten, a bit map including ten bits may be transmitted in the PDSCH. Each of the ten bits indicates whether a respective device to be paged in the paging record list transmits a power supply signal. Assuming that four bits of the ten bits included in the bit map respectively indicate that the corresponding devices to be paged transmit the power supply signal (that is, four devices to be paged in the ten devices to be paged included in the paging record list need to transmit the power supply signal (or it can be said that there are four power supply devices)), a respective index of the power supply signal adopted by each device to be paged that needs to transmit the power supply signal can be further indicated. That is, indexes of the four power supply signals are indicated. Each one of the indexes of the four power supply signals corresponds to a respective one of the four bits in the bit map, and the bit sequence of the indexes of the four power supply signals is consistent with the bit sequence of the four bits. Thus, a power supply device (the device to be paged that needs to transmit the power supply signal) corresponding to the i-th bit in the four bits transmits the power supply signal indicated by the i-th index in the indexes of the four power supply signals, and i is a positive integer less than or equal to 4. It should be understood that the "i-th index" in the embodiment does not denote that an index value is i, but that an index number is i. For example, the index number of the first index is 1 and the index value of the first index is 8.

Based on this, in this example, the transmission of the power supply signal is triggered by a paging mechanism, and a method for triggering the transmission of the power supply signal is provided. The paging mechanism is enriched and improved. It should be noted that the paging described in the above embodiments may be the paging defined in a communication protocol, such as the paging for RRC connection establishment, and the like. Alternatively, the paging described in the above embodiments may be newly defined paging, such as paging dedicated to the power supply. In a case that the paging is the paging defined in the communication protocol, the paging record list carried in the PDSCH carrying the paging message may be a paging record list defined in the communication protocol. However, a corresponding indication bit may be added in the paging record list to indicate that the paging is reused to trigger the transmission of the power supply signal. In the case that the paging is the newly defined paging, the paging record list carried in the PDSCH carrying the paging message may be a newly defined paging record list. Alternatively, in a case that the paging is the newly defined paging, the PDSCH carrying the paging message may simultaneously carry the defined paging record list and the newly defined paging record list, and the newly defined paging record list may be arranged after the defined paging record list. In this way, the power supply device supporting the paging dedicated to power supply can parse the newly defined paging record list and the defined paging record list, and the power supply device not supporting the paging dedicated to power supply may not parse the newly defined paging record list, but can parse the defined paging record list without affecting the defined paging procedure (such as paging for RRC connection establishment).

In another example, when the power supply device is in an RRC connection state, the first trigger information is carried in any one of: the DCI, the RRC signaling, or the MAC CE.

When the power supply device is in the RRC connection state, the transmission of the power supply signal can be triggered by the RRC signaling or the MAC CE, and the transmission of the power supply signal may also be triggered by the DCI. In an example, the DCI may be the defined DCI, and the defined DCI may include DCI for scheduling the PDSCH and the DCI for scheduling a Physical Uplink Shared Channel (PUSCH). For example, the network device may add a corresponding function field to the defined DCI to indicate whether to transmit the power supply signal. In another example, the DCI may be the newly defined DCI except the defined DCI, and the defined DCI may include: the DCI for scheduling the PDSCH and the DCI for scheduling the PUSCH. Based on this, the method may further include the following operation. The network device transmits second indication information to the power supply device, and the second indication information is configured to indicate configuration related to the DCI. Optionally, the second indication information may include at least one of: a search space corresponding to the DCI, a load size of the DCI, or a Radio Network Temporary Identifier (RNTI) for scrambling the DCI.

To sum up, according to the technical solutions provided by the embodiments of the present disclosure, the network device sends the configuration related to the power supply signal to the power supply device, so that the power supply device subsequently transmits the power supply signal to the zero-power terminal through the indicated configuration, thereby realizing the power supply to the zero-power terminal through the power supply device. Moreover, the power supply device can be flexibly deployed in the communication system, so that a coverage distance of the zero-power communication can be improved by supplying power to the zero-power terminal through the power supply device, and at the same time, the zero-power communication is more flexible. In addition, according to the technical solutions provided by the embodiments of the present disclosure, the network device triggers the transmission of the power supply signal through the RRC signaling, the MAC CE, the DCI and the like, so that the network device can flexibly select the power supply device to transmit the power supply signal based on the requirement of the zero-power communication, thereby avoiding wasting the transmission power and processing overhead of the power supply device and realizing the on-demand power supply.

The content of the first indication information and the configuration related to the power supply signal would be described below.

The content of the first indication information is not limited in the embodiments of the present disclosure. The content of the first indication information may be determined based on the requirements of the configuration related to the power supply signal. In an example, the first indication information includes at least one of: time indication information, frequency indication information, beam indication information, power indication information, waveform indication information, mode indication information, synchronization indication information, or identification indication information, which would be introduced and explained respectively below.
(1) The time indication information is configured to indicate transmission time configuration of the power supply signal.

The first indication information from the network device may carry the time indication information so that the transmission time of the power supply signal can be configured to the power supply device. Optionally, the time indication information includes at least one of: a starting transmission time, an ending transmission time, or a transmission duration. Alternatively, in a case that the power supply signal is periodically transmitted, the time indication information includes at least one of: a transmission cycle, a respective starting transmission time of each cycle, a respective ending transmission time of each cycle, or a respective transmission duration of each cycle.

(2) The frequency indication information is configured to indicate transmission frequency configuration of the power supply signal.

The first indication information from the network device may carry the frequency indication information so that the transmission frequency of the power supply signal can be configured to the power supply device. Optionally, the frequency indication information includes at least one of: frequency point information or bandwidth information. The bandwidth information is configured to indicate a bandwidth occupied by the power supply signal, and the unit of the bandwidth includes kilohertz (KHz), megahertz (MHz), and the Physical Resource Block (PRB). The frequency point information can be configured to indicate a frequency point position of the power supply signal, that is, an absolute frequency position. The frequency point information may further be configured to indicate a relative positional relationship (i.e., a relative frequency position) between the frequency point position of the power supply signal and the operating frequency band of the zero-power communication. For example, the frequency point information may be configured to indicate that the frequency point position of the power supply signal is located at the center or edge of the operating frequency band of the zero-power communication.

(3) The beam indication information is configured to indicate transmission beam configuration of the power supply signal.

The first indication information from the network device may carry the beam indication information so that the transmission beam of the power supply signal can be configured to the power supply device. Optionally, the beam indication information may include at least one of: a transmission beam direction or a transmission beam pattern. The transmission of the power supply signal can be omnidirectional transmission, sector transmission or beam scanning transmission. Based on this, optionally, the transmission beam direction or transmission beam pattern is configured to indicate any one of: omnidirectional transmission of the power supply signal, sector transmission of the power supply signal, or beam scanning transmission of the power supply signal.

(4) The power indication information is configured to indicate transmission power configuration of the power supply signal.

The first indication information from the network device may carry the power indication information so that the transmission power of the power supply signal can be configured to the power supply device. Optionally, the power indication information includes at least one of: transmission power information or power adjustment information. The transmission power information is configured to indicate a specific transmission power of the power supply signal. For example, the transmission power information may be configured to indicate that the power supply signal is transmitted at a transmission power of 20dBmw (decibel milliwatts). The power adjustment information may be configured to indicate a power adjustment of transmission power for transmitting the power supply signal this time relative to transmission power for transmitting the power supply signal last time. For example, the power adjustment information is implemented as a command word of a power adjustment. If the transmission power for the power supply device to transmit the power supply signal last time is 20dBmw, the power supply device transmits the power supply signal by using the transmission power of 23dBmw this time when receiving a command word of a power adjustment of increasing 3dBmw.

In general, the power supply device far away from the network device may transmit the power supply signal by using a high transmission power, and the power supply device close to the network device may transmit the power supply signal by using a low transmission power, so that the back scattered signal from the zero-power terminal near the power supply device can be ensure to have a sufficient power level when reaching the network device. For zero-power terminals within the coverage area of the power supply device, the path losses are different due to the different distances between the zero-power terminals and the network device. Based on this, the power adjustment information may further be configured to indicate a power offset of transmission power for transmitting the power supply signal by the power supply device to a zero-power terminal at a first position relative to transmission power for transmitting the power supply signal to a zero-power terminal at a reference position. For example, the power supply device may obtain a path loss based on a measurement of the downlink signal and calculate, based on the path loss, the transmission power P0 for transmitting the power supply signal to the zero-power terminal at the reference position. On the basis of the transmission power P0, the power supply device also increases a power offset indicated by the power adjustment information to determine the transmission power for transmitting the power supply signal to the zero-power terminal at the first position.

(5) The waveform indication information is configured to indicate waveform configuration of the power supply signal.

The first indication information from the network device may carry the waveform indication information so that the waveform of the power supply signal can be configured to the power supply device. Optionally, the waveform indication information includes any one of: a sine wave, a square wave, a sawtooth wave, or a triangular wave. Optionally, in a case that the waveform indication information includes the square wave, the waveform indication information further includes a duty cycle of the square wave.

(6) The mode indication information is configured to indicate implementation mode configuration of the power supply signal.

The first indication information from the network device may carry the mode indication information so that the implementation mode of the power supply signal can be configured to the power supply device. In an example, the mode indication information includes any one of: a defined downlink signal, a defined downlink channel, a defined uplink signal, or a defined uplink channel. For example, in a case that the power supply device is implemented as a relay node, a base station dedicated to power supply or the like, the mode indication information includes the defined downlink signal or the defined downlink channel. In a case that the power supply device is implemented as a CPE, an intelligent terminal, a base station dedicated to power supply or the like, the mode indication information includes the defined uplink signal or the defined uplink channel.

The embodiments of the present disclosure do not limit the specific types of the defined downlink signal, the defined downlink channel, the defined uplink signal and the defined uplink channel. In an example, the defined downlink signal includes any one of: a Positioning Reference Signal (PRS), a Synchronization Signal Block (SSB), or a Channel-State Information Reference Signal (CSI-RS). The defined downlink channel includes any one of: a Physical Downlink Control Channel (PDCCH) or a PDSCH. The defined uplink signal includes any one of: a Sounding Reference Signal (SRS), or a Demodulation Reference Signal (DMRS). The defined uplink channel includes any one of: a Physical Random Access Channel (PRACH), a Physical Uplink Control Channel (PUCCH), or a PUSCH. Optionally, in a case that the mode indication information includes the defined downlink channel or the defined uplink channel, an information source used in a channel coding process includes any one of: a randomly generated data signal or a data signal for service transmission.

In a case that the power supply signal is implemented as the defined downlink signal, the defined downlink channel, the defined uplink signal or the defined uplink channel, if the power supply device needs to transmit the power supply signal on at least two time units, the power supply device transmits the power supply signal with a repeated transmission mode. That is, the power supply signal is repeatedly transmitted on the at least two time units. Optionally, the time unit may include a frame, a sub-frame, a time slot, a sub-time slot, and a symbol. Exemplarily, if the power supply signal is implemented as a PUSCH and the network device indicates that the power supply signal is transmitted on ten time slots, the power supply device repeatedly transmits the PUSCH on each of the ten time slots.

(7) The synchronization indication information is configured to indicate transmission configuration of a synchronization signal corresponding to the power supply signal.

The first indication information from the network device may carry the synchronization indication information so that the transmission of the synchronization signal corresponding to the power supply signal can be configured to the power supply device. For example, whether to transmit the synchronization signal and the configuration related to the transmission of the synchronization signal can be configured to the power supply device. Optionally, in a case that the synchronization indication information is configured to instruct the power supply device to transmit the synchronization signal, the synchronization indication information includes any one of: a starting transmission time of the synchronization signal, or a sequence length of the synchronization signal. Optionally, the power supply device transmits the synchronization signal within a transmission time period of the power supply signal; or the power supply device transmits the synchronization signal after the transmission time period of the power supply signal. The embodiment of the present disclosure is not limited thereto.

(8) The identification indication information is configured to indicate a power supply device corresponding to the configuration related to the power supply signal.

The first indication information from the network device may carry the identification indication information so that a power supply device corresponding to the configuration related to the power supply signal indicated by the first indication information can be indicated. Optionally, the identification indication information includes any one of: an identifier (ID) or a Radio Network Temporary Identity (RNTI). For example, in a case that the network device transmits the first indication information to the power supply device through the RRC signaling, the identification indication information includes the ID. In a case that the network device transmits the first indication information to the power supply device through the DCI, the identification indication information includes the RNTI. Optionally, the ID or the RNTI is pre-configured by the network device.

As can be seen from the above embodiment, the network device can respectively indicate configuration related to the power supply signal for at least one power supply device through the first indication information. That is, the first indication information can indicate the configuration related to at least one power supply signal. Optionally, in a case that the first indication information is configured to indicate configuration related to at least one power supply signal, the first indication information includes at least one of: respective time indication information corresponding to each of the at least one power supply signal, respective frequency indication information corresponding to each of the at least one power supply signal, respective beam indication information corresponding to each of the at least one power supply signal, respective power indication information corresponding to each of the at least one power supply signal, respective waveform indication information corresponding to each of the at least one power supply signal, respective mode indication information corresponding to each of the at least one power supply signal, respective synchronization indication information corresponding to each of the at least one power supply signal, or respective identification indication information corresponding to each of the at least one power supply signal.

According to the embodiment, the network device may transmit the first indication information to the power supply device by using both the RRC signaling and the dynamic signaling. Based on this, part of the content of the first indication information is transmitted through the RRC signaling and part of the content of the first indication information is transmitted through the dynamic signaling, or the initial content of the first indication information is transmitted through the RRC signaling and the updated content of the first indication information is transmitted through the dynamic signaling. For example, initial contents of the time indication information, the frequency indication information, the beam indication information, the power indication information, the waveform indication information, the mode indication information, the synchronization indication information and the identification indication information are transmitted through the RRC signaling, and in a case that the contents of the above information are updated, for example, the updated contents of the time indication information and the identification indication information are transmitted through the DCI. For another example, the frequency indication information, the beam indication information, the power indication information, the waveform indication information, the mode indication information and the synchronization indication information are transmitted through the RRC signaling, and the time indication information and the identification indication information are transmitted through the DCI. Alternatively, the frequency indication information, the beam indication information, the waveform indication information, the mode indication information and the synchronization indication information are transmitted through the RRC signaling, and the time indication information, the frequency indication information and the identification indication information are transmitted through the DCI.

To sum up, according to the technical solutions provided by the embodiment of the present disclosure, one or more of the time indication information, the frequency indication information, the beam indication information, the power indication information, the waveform indication information, the mode indication information, the synchronization indication information or the identification indication information are carried in the first indication information, so that the transmission time, the transmission frequency, the transmission beam, the transmission power, the waveform, the implementation mode, the corresponding synchronization signal and the corresponding power supply device of the power supply signal can be indicated to the power supply device respectively, which fully considers the configuration requirements of the power supply signal and contributes to improving the configuration of the power supply signal.

It should be noted that in the above embodiments, the information transmission method provided by the embodiments of the present disclosure is described from the perspective of interaction between the network device and the power supply device. Each operation performed by the network device in the above embodiment can be individually implemented as an information transmission method on the network device side. Each operation performed by the power supply device can be individually implemented as an information transmission method on the power supply device side.

The following are apparatus embodiments of the present disclosure, which can be used to perform the method embodiments of the present disclosure. For details not disclosed in the apparatus embodiments of the present disclosure, reference can be made to the method embodiments of the present disclosure.

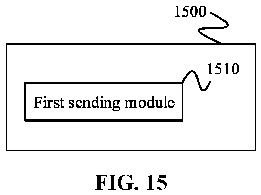

Referring to FIG. 15, a block diagram of an information transmission apparatus according to an embodiment of the present disclosure is illustrated. The apparatus has functions of implementing the examples of the above information transmission method. The functions can be implemented by hardware or by executing corresponding software by hardware. The apparatus may be the network device described above or may be disposed in the network device. As illustrated in FIG. 15, the apparatus 1500 may include a first sending module 1510.

The first sending module 1510 is configured to send first indication information. The first indication information is configured to indicate configuration related to a power supply signal, and the power supply signal is configured to supply power to a zero-power terminal.

In an example, the first indication information includes at least one of: time indication information configured to indicate transmission time configuration of the power supply signal, frequency indication information configured to indicate transmission frequency configuration of the power supply signal, beam indication information configured to indicate transmission beam configuration of the power supply signal, power indication information configured to indicate transmission power configuration of the power supply signal, waveform indication information configured to indicate waveform configuration of the power supply signal, mode indication information configured to indicate implementation mode configuration of the power supply signal, synchronization indication information configured to indicate transmission configuration of a synchronization signal corresponding to the power supply signal, or identification indication information configured to indicate a power supply device corresponding to the configuration related to the power supply signal.

In an example, the time indication information includes at least one of: a starting transmission time, an ending transmission time, a transmission duration, a transmission cycle, a respective starting transmission time of each cycle, a respective ending transmission time of each cycle, or a respective transmission duration of each cycle.

In an example, the frequency indication information includes at least one of: frequency point information or bandwidth information.

In an example, the frequency point information is configured to indicate any one of: a frequency point position of the power supply signal, or a relative positional relationship between the frequency point position of the power supply signal and an operating frequency band of zero-power communication.

In an example, the beam indication information includes at least one of: a transmission beam direction or a transmission beam pattern.

In an example, the transmission beam direction or the transmission beam pattern is configured to indicate any one of: omnidirectional transmission of the power supply signal, sector transmission of the power supply signal, or beam scanning transmission of the power supply signal.

In an example, the power indication information includes at least one of: transmission power information or power adjustment information.

In an example, the power adjustment information is configured to indicate at least one of: a power adjustment of transmission power for transmitting the power supply signal currently relative to transmission power for transmitting the power supply signal previously; or a power offset of transmission power for transmitting the power supply signal to a zero-power terminal at a first position relative to transmission power for transmitting the power supply signal to a zero-power terminal at a reference position.

In an example, the waveform indication information includes any one of: a sine wave, a square wave, a sawtooth wave, or a triangular wave.

In an example, in a case that the waveform indication information includes the square wave, the waveform indication information further includes a duty cycle of the square wave.

In an example, the mode indication information includes any one of: a defined downlink signal, a defined downlink channel, a defined uplink signal, or a defined uplink channel.

In an example, the defined downlink signal includes any one of: a Synchronization Signal Block (SSB), a Positioning Reference Signal (PRS), or a Channel-State Information Reference Signal (CSI-RS); the defined downlink channel includes any one of: a Physical Downlink Control Channel (PDCCH) or a Physical Downlink Shared Channel (PDSCH), the defined uplink signal includes any one of: a Sounding Reference Signal (SRS) or a Demodulation Reference Signal (DMRS); and the defined uplink channel includes any one of: a Physical Random Access Channel (PRACH), a Physical Uplink Control Channel (PUCCH), or a Physical Uplink Shared Channel (PUSCH).

In an example, in a case that the power supply signal is transmitted on at least two time units, the power supply signal is transmitted repeatedly on the at least two time units.

In an example, in a case that the mode indication information includes the defined downlink channel or the defined uplink channel, an information source used in a channel coding process includes any one of: a randomly generated data signal or a data signal for service transmission.

In an example, in a case that the synchronization indication information is configured to instruct the power supply device to transmit the synchronization signal, the synchronization indication information includes any one of: a starting transmission time of the synchronization signal, or a sequence length of the synchronization signal.

In an example, the power supply device transmits the synchronization signal within a transmission time period of the power supply signal; or the power supply device transmits the synchronization signal after the transmission time period of the power supply signal.

In an example, the identification indication information includes any one of: an identifier (ID) or a Radio Network Temporary Identity (RNTI).

In an example, the ID or the RNTI is pre-configured by the network device.

In an example, in a case that the first indication information is configured to indicate configuration related to at least one power supply signal, the first indication information includes at least one of: respective time indication information corresponding to each of the at least one power supply signal, respective frequency indication information corresponding to each of the at least one power supply signal, respective beam indication information corresponding to each of the at least one power supply signal, respective power indication information corresponding to each of the at least one power supply signal, respective waveform indication information corresponding to each of the at least one power supply signal, respective mode indication information corresponding to each of the at least one power supply signal, respective synchronization indication information corresponding to each of the at least one power supply signal, or respective identification indication information corresponding to each of the at least one power supply signal.

In an example, the first indication information is carried in at least one of: Radio Resource Control (RRC) signaling, Medium Access Control Control Element (MAC CE) or Downlink Control Information (DCI).

In an example, the first indication information is further configured to instruct a power supply device to transmit the power supply signal to the zero-power device.

In an example, in a case that the power supply device is in a Radio Resource Control (RRC) idle state or an RRC inactive state, the first indication information is carried in any one of: Downlink Control Information (DCI) for scheduling a Physical Downlink Shared Channel (PDSCH) carrying a paging message, or the PDSCH carrying the paging message.

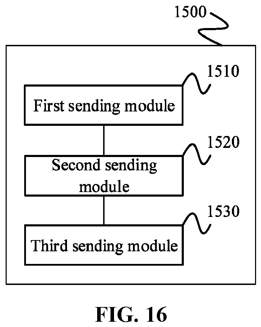

In an example, as illustrated in FIG. 16, the apparatus 1500 further includes a second sending module 1520. The second sending module 1520 is configured to send first triggering information, and the first triggering information is configured to instruct the power supply device to transmit the power supply signal to the zero-power terminal.

In an example, in a case that the power supply device is in a Radio Resource Control (RRC) idle state or an RRC inactive state, the first trigger information is carried in any one of: Downlink Control Information (DCI) for scheduling a Physical Downlink Shared Channel (PDSCH) carrying a paging message, or the PDSCH carrying the paging message.

In an example, the PDSCH carrying the paging message carries a paging record list, and the paging record list includes at least one device identifier of at least one device to be paged. The first trigger information is further configured to indicate the power supply device, which transmits the power supply signal to the zero-power terminal, of the at least one device to be paged.

In an example, the first trigger information is further configured to indicate an index of the power supply signal.

In an example, in a case that the power supply device is in a Radio Resource Control (RRC) connection state, the first trigger information is carried in any one of: Downlink Control Information (DCI), RRC signaling, or Medium Access Control Control Element (MAC CE).

In an example, the DCI is defined DCI, and the defined DCI includes: DCI for scheduling a Physical Downlink Shared Channel (PDSCH), and DCI for scheduling a Physical Uplink Shared Channel (PUSCH).

In an example, the DCI is newly defined DCI except defined DCI, and the defined DCI includes: DCI for scheduling a Physical Downlink Shared Channel (PDSCH), and DCI for scheduling a Physical Uplink Shared Channel (PUSCH). As illustrated in FIG. 16, the apparatus 1500 further includes a third sending module 1530. The third sending module 1530 is configured to send second indication information. The second indication information is configured to indicate configuration related to the DCI.

In an example, the second indication information includes at least one of: a search space corresponding to the DCI, a load size of the DCI, or a Radio Network Temporary Identity (RNTI) for scrambling the DCI.

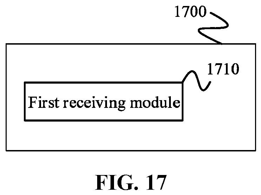

Referring to FIG. 17, a block diagram of an information transmission apparatus according to an embodiment of the present disclosure is illustrated. The apparatus has functions of implementing the example of the above information transmission method. The functions can be implemented by hardware or by executing corresponding software by hardware. The apparatus can be the power supply device described above or can be disposed in the power supply device. As illustrated in FIG. 17, the apparatus 1700 includes a first receiving module 1710.

The first receiving module 1710 is configured to receive first indication information. The first indication information is configured to indicate configuration related to a power supply signal, and the power supply signal is configured to supply power to a zero-power terminal.

In an example, the first indication information includes at least one of: time indication information configured to indicate transmission time configuration of the power supply signal, frequency indication information configured to indicate transmission frequency configuration of the power supply signal, beam indication information configured to indicate transmission beam configuration of the power supply signal, power indication information configured to indicate transmission power configuration of the power supply signal, waveform indication information configured to indicate waveform configuration of the power supply signal, mode indication information configured to indicate implementation mode configuration of the power supply signal, synchronization indication information configured to indicate transmission configuration of a synchronization signal corresponding to the power supply signal, or identification indication information configured to indicate a power supply device corresponding to the configuration related to the power supply signal.

In an example, the time indication information includes at least one of: a starting transmission time, an ending transmission time, a transmission duration, a transmission cycle, a respective starting transmission time of each cycle, a respective ending transmission time of each cycle, or a respective transmission duration of each cycle.

In an example, the frequency indication information includes at least one of: frequency point information or bandwidth information.

In an example, the frequency point information is configured to indicate any one of: a frequency point position of the power supply signal, or a relative positional relationship between the frequency point position of the power supply signal and an operating frequency band of zero-power communication.

In an example, the beam indication information includes at least one of: a transmission beam direction or a transmission beam pattern.

In an example, the transmission beam direction or the transmission beam pattern is configured to indicate any one of: omnidirectional transmission of the power supply signal, sector transmission of the power supply signal, or beam scanning transmission of the power supply signal.

In an example, the power indication information includes at least one of: transmission power information or power adjustment information.

In an example, the power adjustment information is configured to indicate at least one of: a power adjustment of transmission power for transmitting the power supply signal this time relative to transmission power for transmitting the power supply signal last time; or a power offset of transmission power for transmitting the power supply signal to a zero-power terminal at a first position relative to transmission power for transmitting the power supply signal to a zero-power terminal at a reference position.

In an example, the waveform indication information includes any one of: a sine wave, a square wave, a sawtooth wave, or a triangular wave.

In an example, in a case that the waveform indication information includes the square wave, the waveform indication information further includes a duty cycle of the square wave.

In an example, the mode indication information includes any one of: a defined downlink signal, a defined downlink channel, a defined uplink signal, or a defined uplink channel.

In an example, the defined downlink signal includes any one of: a Synchronization Signal Block (SSB), a Positioning Reference Signal (PRS), or a Channel-State Information Reference Signal (CSI-RS); the defined downlink channel includes any one of: a Physical Downlink Control Channel (PDCCH) or a Physical Downlink Shared Channel (PDSCH), the defined uplink signal includes any one of: a Sounding Reference Signal (SRS) or a Demodulation Reference Signal (DMRS); and the defined uplink channel includes any one of: a Physical Random Access Channel (PRACH), a Physical Uplink Control Channel (PUCCH), or a Physical Uplink Shared Channel (PUSCH).

In an example, in a case that the power supply signal is transmitted on at least two time units, the power supply signal is transmitted repeatedly on the at least two time units.

In an example, in a case that the mode indication information includes the defined downlink channel or the defined uplink channel, an information source used in a channel coding process includes any one of: a randomly generated data signal or a data signal for service transmission.

In an example, in a case that the synchronization indication information is configured to instruct the power supply device to transmit the synchronization signal, the synchronization indication information includes any one of: a starting transmission time of the synchronization signal, or a sequence length of the synchronization signal.

In an example, the synchronization signal is transmitted within a transmission time period of the power supply signal, or the synchronization signal is transmitted after the transmitting period of the power supply signal.

In an example, the identification indication information includes any one of: an identifier (ID) or a Radio Network Temporary Identity (RNTI).

In an example, the ID or the RNTI is pre-configured by a network device.

In an example, in a case that the first indication information is configured to indicate configuration related to at least one power supply signal, the first indication information includes at least one of: respective time indication information corresponding to each of the at least one power supply signal, respective frequency indication information corresponding to each of the at least one power supply signal, respective beam indication information corresponding to each of the at least one power supply signal, respective power indication information corresponding to each of the at least one power supply signal, respective waveform indication information corresponding to each of the at least one power supply signal, respective mode indication information corresponding to each of the at least one power supply signal, respective synchronization indication information corresponding to each of the at least one power supply signal, or respective identification indication information corresponding to each of the at least one power supply signal.

In an example, the first indication information is carried in at least one of: Radio Resource Control (RRC) signaling, Medium Access Control Control Element (MAC CE) or Downlink Control Information (DCI).

In an example, the first indication information is further configured to instruct the power supply device to transmit the power supply signal to the zero-power device.

In an example, in a case that the power supply device is in a Radio Resource Control (RRC) idle state or an RRC inactive state, the first indication information is carried in any one of: Downlink Control Information (DCI) for scheduling a Physical Downlink Shared Channel (PDSCH) carrying a paging message, or the PDSCH carrying the paging message.

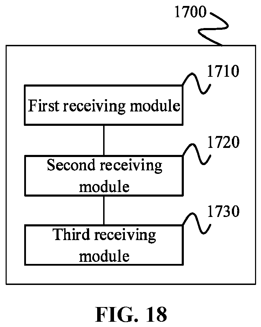

In an example, as illustrated in FIG. 18, the apparatus 1700 further includes a second receiving module 1720. The second receiving module 1720 is configured to receive the first trigger information. The first triggering information is configured to instruct the power supply device to transmit the power supply signal to the zero-power terminal.

In an example, in a case that the power supply device is in a Radio Resource Control (RRC) idle state or an RRC inactive state, the first trigger information is carried in any one of: Downlink Control Information (DCI) for scheduling a Physical Downlink Shared Channel (PDSCH) carrying a paging message, or the PDSCH carrying the paging message.

In an example, the PDSCH carrying the paging message carries a paging record list, and the paging record list includes at least one device identifier of at least one device to be paged. The first trigger information is further configured to indicate the power supply device, which transmits the power supply signal to the zero-power terminal, of the at least one device to be paged.

In an example, the first trigger information is further configured to indicate an index of the power supply signal.

In an example, in a case that the power supply device is in a Radio Resource Control (RRC) connection state, the first trigger information is carried in any one of: Downlink Control Information (DCI), RRC signaling, or Medium Access Control Control Element (MAC CE).

In an example, the DCI is defined DCI, and the defined DCI includes: DCI for scheduling a Physical Downlink Shared Channel (PDSCH), and DCI for scheduling a Physical Uplink Shared Channel (PUSCH).

In an example, the DCI is newly defined DCI except defined DCI, and the defined DCI includes: DCI for scheduling a Physical Downlink Shared Channel (PDSCH), and DCI for scheduling a Physical Uplink Shared Channel (PUSCH). As illustrated in FIG. 18, the apparatus 1700 further includes a third receiving module 1730. The third receiving module 1730 is configured to receive second indication information. The second indication information is configured to indicate configuration related to the DCI.

In an example, the second indication information includes at least one of: a search space corresponding to the DCI, a load size of the DCI, or a Radio Network Temporary Identity (RNTI) for scrambling the DCI.

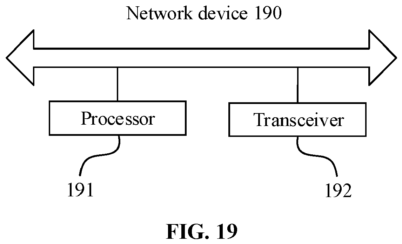

Referring to FIG. 19, a structural diagram of a network device 190 according to an embodiment of the present disclosure is illustrated. For example, the network device may be configured to perform the above-mentioned information transmission method on a network device side. Specifically, the power supply device 190 may include a processor 191 and a transceiver 192 connected to the processor 191.

The processor 191 includes one or more processing cores and executes various functional applications and information processing by running software programs and modules.

The transceiver 192 includes a receiver and a transmitter. Optionally, the transceiver 192 is a communication chip.

In an example, the network device 190 further includes a memory and a bus. The memory is connected to the processor through the bus. The memory may be used to store a computer program, and the processor may be used to execute the computer program to implement the various operations performed by the network device in the above method embodiments.

In addition, the memory may be implemented by any type of volatile storage device or non-volatile storage device or combination of the volatile storage device and non-volatile storage device. The volatile storage device or non-volatile storage device may include but is not limited to: a Random Access Memory (RAM) and a Read-Only Memory (ROM), an Erasable Programmable Read-Only Memory (EPROM), an Electrically Erasable Programmable Read-Only Memory (EEPROM), a flash memory or other solid-state storage technologies, a Compact Disc Read-Only Memory (CD-ROM), a Digital Video Disc (DVD) or other optical storage, a cassette, a magnetic tape, a magnetic disk storage or other magnetic storage devices.

The transceiver 192 is configured to send first indication information. The first indication information is configured to indicate configuration related to a power supply signal, and the power supply signal is configured to supply power to a zero-power terminal.

In an example, the first indication information includes at least one of: time indication information configured to indicate transmission time configuration of the power supply signal, frequency indication information configured to indicate transmission frequency configuration of the power supply signal, beam indication information configured to indicate transmission beam configuration of the power supply signal, power indication information configured to indicate transmission power configuration of the power supply signal, waveform indication information configured to indicate waveform configuration of the power supply signal, mode indication information configured to indicate implementation mode configuration of the power supply signal, synchronization indication information configured to indicate transmission configuration of a synchronization signal corresponding to the power supply signal, or identification indication information configured to indicate a power supply device corresponding to the configuration related to the power supply signal.

In an example, the time indication information includes at least one of: a starting transmission time, an ending transmission time, a transmission duration, a transmission cycle, a respective starting transmission time of each cycle, a respective ending transmission time of each cycle, or a respective transmission duration of each cycle.

In an example, the frequency indication information includes at least one of: frequency point information or bandwidth information.

In an example, the frequency point information is configured to indicate any one of: a frequency point position of the power supply signal, or a relative positional relationship between the frequency point position of the power supply signal and an operating frequency band of zero-power communication.

In an example, the beam indication information includes at least one of: a transmission beam direction or a transmission beam pattern.

In an example, the transmission beam direction or the transmission beam pattern is configured to indicate any one of: omnidirectional transmission of the power supply signal, sector transmission of the power supply signal, or beam scanning transmission of the power supply signal.

In an example, the power indication information includes at least one of: transmission power information or power adjustment information.

In an example, the power adjustment information is configured to indicate at least one of: a power adjustment of transmission power for transmitting the power supply signal this time relative to transmission power for transmitting the power supply signal last time; or a power offset of transmission power for transmitting the power supply signal to a zero-power terminal at a first position relative to transmission power for transmitting the power supply signal to a zero-power terminal at a reference position.

In an example, the waveform indication information includes any one of: a sine wave, a square wave, a sawtooth wave, or a triangular wave.

In an example, in a case that the waveform indication information includes the square wave, the waveform indication information further includes a duty cycle of the square wave.

In an example, the mode indication information includes any one of: a defined downlink signal, a defined downlink channel, a defined uplink signal, or a defined uplink channel.

In an example, the defined downlink signal includes any one of: a Synchronization Signal Block (SSB), a Positioning Reference Signal (PRS), or a Channel-State Information Reference Signal (CSI-RS); the defined downlink channel includes any one of: a Physical Downlink Control Channel (PDCCH) or a Physical Downlink Shared Channel (PDSCH), the defined uplink signal includes any one of: a Sounding Reference Signal (SRS) or a Demodulation Reference Signal (DMRS); and the defined uplink channel includes any one of: a Physical Random Access Channel (PRACH), a Physical Uplink Control Channel (PUCCH), or a Physical Uplink Shared Channel (PUSCH).

In an example, in a case that the power supply signal is transmitted on at least two time units, the power supply signal is transmitted repeatedly on the at least two time units.

In an example, in a case that the mode indication information includes the defined downlink channel or the defined uplink channel, an information source used in a channel coding process includes any one of: a randomly generated data signal or a data signal for service transmission.

In an example, in a case that the synchronization indication information is configured to instruct the power supply device to transmit the synchronization signal, the synchronization indication information includes any one of: a starting transmission time of the synchronization signal, or a sequence length of the synchronization signal.

In an example, the power supply device transmits the synchronization signal within a transmission time period of the power supply signal; or the power supply device transmits the synchronization signal after the transmission time period of the power supply signal.

In an example, the identification indication information includes any one of: an identifier (ID) or a Radio Network Temporary Identity (RNTI).

In an example, the ID or the RNTI is pre-configured by the network device.

In an example, in a case that the first indication information is configured to indicate configuration related to at least one power supply signal, the first indication information includes at least one of: respective time indication information corresponding to each of the at least one power supply signal, respective frequency indication information corresponding to each of the at least one power supply signal, respective beam indication information corresponding to each of the at least one power supply signal, respective power indication information corresponding to each of the at least one power supply signal, respective waveform indication information corresponding to each of the at least one power supply signal, respective mode indication information corresponding to each of the at least one power supply signal, respective synchronization indication information corresponding to each of the at least one power supply signal, or respective identification indication information corresponding to each of the at least one power supply signal.

In an example, the first indication information is carried in at least one of: Radio Resource Control (RRC) signaling, Medium Access Control Control Element (MAC CE) or Downlink Control Information (DCI).

In an example, the first indication information is further configured to instruct a power supply device to transmit the power supply signal to the zero-power device.

In an example, in a case that the power supply device is in a Radio Resource Control (RRC) idle state or an RRC inactive state, the first indication information is carried in any one of: Downlink Control Information (DCI) for scheduling a Physical Downlink Shared Channel (PDSCH) carrying a paging message, or the PDSCH carrying the paging message.

In an example, the illustrated transceiver 192 is further configured to sending first trigger information. The first triggering information is configured to instruct a power supply device to transmit the power supply signal to the zero-power terminal.

In an example, in a case that the power supply device is in a Radio Resource Control (RRC) idle state or an RRC inactive state, the first trigger information is carried in any one of: Downlink Control Information (DCI) for scheduling a Physical Downlink Shared Channel (PDSCH) carrying a paging message, or the PDSCH carrying the paging message.

In an example, the PDSCH carrying the paging message carries a paging record list, and the paging record list includes at least one device identifier of at least one device to be paged. The first trigger information is further configured to indicate the power supply device, which transmits the power supply signal to the zero-power terminal, of the at least one device to be paged.

In an example, the first trigger information is further configured to indicate an index of the power supply signal.

In an example, in a case that the power supply device is in a Radio Resource Control (RRC) connection state, the first trigger information is carried in any one of: Downlink Control Information (DCI), RRC signaling, or Medium Access Control Control Element (MAC CE).

In an example, the DCI is defined DCI, and the defined DCI includes: DCI for scheduling a Physical Downlink Shared Channel (PDSCH), and DCI for scheduling a Physical Uplink Shared Channel (PUSCH).

In an example, the DCI is newly defined DCI except defined DCI, and the defined DCI includes: DCI for scheduling a Physical Downlink Shared Channel (PDSCH), and DCI for scheduling a Physical Uplink Shared Channel (PUSCH). The transceiver 192 is further configured to send second indication information. The second indication information is configured to indicate configuration related to the DCI.

In an example, the second indication information includes at least one of: a search space corresponding to the DCI, a load size of the DCI, or a Radio Network Temporary Identity (RNTI) for scrambling the DCI.

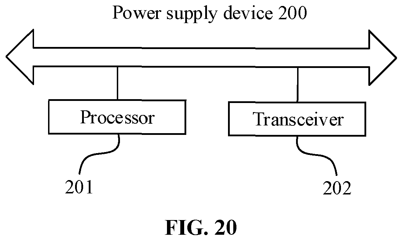

FIG. 20 illustrates a structural diagram of a power supply device 200 according to an embodiment of the present disclosure. For example, the power supply device may be used for executing the above-mentioned information transmission method on the power supply device side. Specifically, the power supply device 200 includes a processor 201 and a transceiver 202 connected to the processor 201.

The processor 201 includes one or more processing cores and executes various functional applications and information processing by running software programs and modules.

The transceiver 202 includes a receiver and a transmitter. Optionally, the transceiver 202 is a communication chip.

In an example, the power supply device 200 further includes a memory and a bus. The memory is connected to a processor through the bus. The memory may be configured to store a computer program, and the processor may be configured to execute the computer program to implement the various operations performed by the power supply device in the above method embodiments.

In addition, the memory may be implemented by any type of volatile storage device or non-volatile storage device or combination of the volatile storage device and non-volatile storage device. The volatile storage device or non-volatile storage device may include but is not limited to: a Random Access Memory (RAM) and a Read-Only Memory (ROM), an Erasable Programmable Read-Only Memory (EPROM), an Electrically Erasable Programmable Read-Only Memory (EEPROM), a flash memory or other solid-state storage technologies, a Compact Disc Read-Only Memory (CD-ROM), a Digital Video Disc (DVD) or other optical storage, a cassette, a magnetic tape, a magnetic disk storage or other magnetic storage devices.

The transceiver 202 is configured to receive first indication information. The first indication information is configured to indicate configuration related to a power supply signal, and the power supply signal is configured to supply power to a zero-power terminal.

In an example, the first indication information includes at least one of: time indication information configured to indicate transmission time configuration of the power supply signal, frequency indication information configured to indicate transmission frequency configuration of the power supply signal, beam indication information configured to indicate transmission beam configuration of the power supply signal, power indication information configured to indicate transmission power configuration of the power supply signal, waveform indication information configured to indicate waveform configuration of the power supply signal, mode indication information configured to indicate implementation mode configuration of the power supply signal, synchronization indication information configured to indicate transmission configuration of a synchronization signal corresponding to the power supply signal, or identification indication information configured to indicate a power supply device corresponding to the configuration related to the power supply signal.

In an example, the time indication information includes at least one of: a starting transmission time, an ending transmission time, a transmission duration, a transmission cycle, a respective starting transmission time of each cycle, a respective ending transmission time of each cycle, or a respective transmission duration of each cycle.

In an example, the frequency indication information includes at least one of: frequency point information or bandwidth information.

In an example, the frequency point information is configured to indicate any one of: a frequency point position of the power supply signal, or a relative positional relationship between the frequency point position of the power supply signal and an operating frequency band of zero-power communication.

In an example, the beam indication information includes at least one of: a transmission beam direction or a transmission beam pattern.

In an example, the transmission beam direction or the transmission beam pattern is configured to indicate any one of: omnidirectional transmission of the power supply signal, sector transmission of the power supply signal, or beam scanning transmission of the power supply signal.

In an example, the power indication information includes at least one of: transmission power information or power adjustment information.

In an example, the power adjustment information is configured to indicate at least one of: a power adjustment of transmission power for transmitting the power supply signal this time relative to transmission power for transmitting the power supply signal last time; or a power offset of transmission power for transmitting the power supply signal to a zero-power terminal at a first position relative to transmission power for transmitting the power supply signal to a zero-power terminal at a reference position.

In an example, the waveform indication information includes any one of: a sine wave, a square wave, a sawtooth wave, or a triangular wave.

In an example, in a case that the waveform indication information includes the square wave, the waveform indication information further includes a duty cycle of the square wave.

In an example, the mode indication information includes any one of: a defined downlink signal, a defined downlink channel, a defined uplink signal, or a defined uplink channel.

In an example, the defined downlink signal includes any one of: a Synchronization Signal Block (SSB), a Positioning Reference Signal (PRS), or a Channel-State Information Reference Signal (CSI-RS); the defined downlink channel includes any one of: a Physical Downlink Control Channel (PDCCH) or a Physical Downlink Shared Channel (PDSCH), the defined uplink signal includes any one of: a Sounding Reference Signal (SRS) or a Demodulation Reference Signal (DMRS); and the defined uplink channel includes any one of: a Physical Random Access Channel (PRACH), a Physical Uplink Control Channel (PUCCH), or a Physical Uplink Shared Channel (PUSCH).

In an example, in a case that the power supply signal is transmitted on at least two time units, the power supply signal is transmitted repeatedly on the at least two time units.

In an example, in a case that the mode indication information includes the defined downlink channel or the defined uplink channel, an information source used in a channel coding process includes any one of: a randomly generated data signal or a data signal for service transmission.

In an example, in a case that the synchronization indication information is configured to instruct the power supply device to transmit the synchronization signal, the synchronization indication information includes any one of: a starting transmission time of the synchronization signal, or a sequence length of the synchronization signal.

In an example, the synchronization signal is transmitted within a transmission time period of the power supply signal, or the synchronization signal is transmitted after the transmitting period of the power supply signal.

In an example, the identification indication information includes any one of: an identifier (ID) or a Radio Network Temporary Identity (RNTI).

In an example, the ID or the RNTI is pre-configured by a network device.

In an example, in a case that the first indication information is configured to indicate configuration related to at least one power supply signal, the first indication information includes at least one of: respective time indication information corresponding to each of the at least one power supply signal, respective frequency indication information corresponding to each of the at least one power supply signal, respective beam indication information corresponding to each of the at least one power supply signal, respective power indication information corresponding to each of the at least one power supply signal, respective waveform indication information corresponding to each of the at least one power supply signal, respective mode indication information corresponding to each of the at least one power supply signal, respective synchronization indication information corresponding to each of the at least one power supply signal, or respective identification indication information corresponding to each of the at least one power supply signal.

In an example, the first indication information is carried in at least one of: Radio Resource Control (RRC) signaling, Medium Access Control Control Element (MAC CE) or Downlink Control Information (DCI).

In an example, the first indication information is further configured to instruct the power supply device to transmit the power supply signal to the zero-power device.

In an example, in a case that the power supply device is in a Radio Resource Control (RRC) idle state or an RRC inactive state, the first indication information is carried in any one of: Downlink Control Information (DCI) for scheduling a Physical Downlink Shared Channel (PDSCH) carrying a paging message, or the PDSCH carrying the paging message.

In an example, the transceiver 202 is further configured to receive first trigger information. The first triggering information is configured to instruct the power supply device to transmit the power supply signal to the zero-power terminal.

In an example, in a case that the power supply device is in a Radio Resource Control (RRC) idle state or an RRC inactive state, the first trigger information is carried in any one of: Downlink Control Information (DCI) for scheduling a Physical Downlink Shared Channel (PDSCH) carrying a paging message, or the PDSCH carrying the paging message.

In an example, the PDSCH carrying the paging message carries a paging record list, and the paging record list includes at least one device identifier of at least one device to be paged. The first trigger information is further configured to indicate the power supply device, which transmits the power supply signal to the zero-power terminal, of the at least one device to be paged.

In an example, the first trigger information is further configured to indicate an index of the power supply signal.

In an example, in a case that the power supply device is in a Radio Resource Control (RRC) connection state, the first trigger information is carried in any one of: Downlink Control Information (DCI), RRC signaling, or Medium Access Control Control Element (MAC CE).

In an example, the DCI is defined DCI, and the defined DCI includes: DCI for scheduling a Physical Downlink Shared Channel (PDSCH), and DCI for scheduling a Physical Uplink Shared Channel (PUSCH).

In an example, the DCI is newly defined DCI except defined DCI, and the defined DCI includes: DCI for scheduling a Physical Downlink Shared Channel (PDSCH), and DCI for scheduling a Physical Uplink Shared Channel (PUSCH). As illustrated in FIG. 20, the transceiver 202 further configured to receive second indication information. The second indication information is configured to indicate configuration related to the DCI.

In an example, the second indication information includes at least one of: a search space corresponding to the DCI, a load size of the DCI, or a Radio Network Temporary Identity (RNTI) for scrambling the DCI.

An embodiment of the present disclosure further provides a computer-readable storage medium, having stored thereon a computer program that is configured to be executed by a processor of a network device to implement the above-mentioned information transmission method on a network device side.

An embodiment of the present disclosure further provides a computer-readable storage medium, having stored thereon a computer program that is configured to be executed by a processor of a power supply device to implement the above-mentioned information transmission method on a power supply device side.

An embodiment of the present disclosure provides a chip including a programmable logic circuit and/or program instructions that, when the chip is running on a network device, implements the above-mentioned information transmission method on a network device side.

An embodiment of the present disclosure provides a chip including a programmable logic circuit and/or program instructions that, when the chip is running on a power supply device, implements the above-mentioned information transmission method on a power supply device side.

An embodiment of the present disclosure provides a computer program product that, when running on a network device, implements the above-mentioned information transmission method on a network device side.

An embodiment of the present disclosure provides a computer program product that, when running on a power supply device, implements the above-mentioned information transmission method on a power supply device side.

Those skilled in the art would appreciate that in one or more of the above examples, the functions described in the embodiments of the present disclosure may be implemented by means of hardware, software, firmware or any combination thereof. When being implemented in software, these functions may be stored in a computer-readable medium or may be transmitted as one or more instructions or codes on the computer-readable medium. The computer-readable medium includes a computer storage medium and a communication medium. The communication medium includes any medium that facilitates the transfer of a computer program from one place to another. The storage medium may be any available medium that can be accessed by a general-purpose computer or special-purpose computer.

The above are only exemplary embodiments of the present disclosure and are not intended to limit the present disclosure. Any modification, equivalent replacement, improvement or the like made within the spirit and principles of the present disclosure shall be included in the scope of protection of the present disclosure.

## Claims

1. An information transmission method, performed by a network device, comprising:
sending first indication information, wherein the first indication information is configured to indicate configuration related to a power supply signal, and the power supply signal is configured to supply power to a zero-power terminal.

2. The method of claim 1, wherein the first indication information comprises at least one of:
time indication information, configured to indicate transmission time configuration of the power supply signal;
frequency indication information, configured to indicate transmission frequency configuration of the power supply signal;
beam indication information, configured to indicate transmission beam configuration of the power supply signal;
power indication information, configured to indicate transmission power configuration of the power supply signal;
waveform indication information, configured to indicate waveform configuration of the power supply signal;
mode indication information, configured to indicate implementation mode configuration of the power supply signal;
synchronization indication information, configured to indicate transmission configuration of a synchronization signal corresponding to the power supply signal; or
identification indication information, configured to indicate a power supply device corresponding to the configuration related to the power supply signal.

3. The method of claim 2, wherein the time indication information comprises at least one of: a starting transmission time, an ending transmission time, a transmission duration, a transmission cycle, a respective starting transmission time of each cycle, a respective ending transmission time of each cycle, or a respective transmission duration of each cycle.

4. The method of claim 2 or 3, wherein the frequency indication information comprises at least one of: frequency point information or bandwidth information.

5. The method of claim 4, wherein the frequency point information is configured to indicate any one of: a frequency point position of the power supply signal, or a relative positional relationship between the frequency point position of the power supply signal and an operating frequency band of zero-power communication.

6. The method of any one of claims 2 to 5, wherein the beam indication information comprises at least one of: a transmission beam direction or a transmission beam pattern.

7. The method of claim 6, wherein the transmission beam direction or the transmission beam pattern is configured to indicate any one of: omnidirectional transmission of the power supply signal, sector transmission of the power supply signal, or beam scanning transmission of the power supply signal.

8. The method of any one of claims 2 to 7, wherein the power indication information comprises at least one of: transmission power information or power adjustment information.

9. The method of claim 8, wherein the power adjustment information is configured to indicate at least one of:
a power adjustment of transmission power for transmitting the power supply signal this time relative to transmission power for transmitting the power supply signal last time; or
a power offset of transmission power for transmitting the power supply signal to a zero-power terminal at a first position relative to transmission power for transmitting the power supply signal to a zero-power terminal at a reference position.

10. The method of any one of claims 2 to 9, wherein the waveform indication information comprises any one of: a sine wave, a square wave, a sawtooth wave, or a triangular wave.

11. The method of claim 10, wherein in a case that the waveform indication information comprises the square wave, the waveform indication information further comprises a duty cycle of the square wave.

12. The method of any one of claims 2 to 11, wherein the mode indication information comprises any one of: a defined downlink signal, a defined downlink channel, a defined uplink signal, or a defined uplink channel.

13. The method of claim 12, wherein
the defined downlink signal comprises any one of: a Synchronization Signal Block (SSB), a Positioning Reference Signal (PRS), or a Channel-State Information Reference Signal (CSI-RS);
the defined downlink channel comprises any one of: a Physical Downlink Control Channel (PDCCH) or a Physical Downlink Shared Channel (PDSCH);
the defined uplink signal comprises any one of: a Sounding Reference Signal (SRS) or a Demodulation Reference Signal (DMRS); and
the defined uplink channel comprises any one of: a Physical Random Access Channel (PRACH), a Physical Uplink Control Channel (PUCCH), or a Physical Uplink Shared Channel (PUSCH).

14. The method of claim 12 or 13, wherein in a case that the power supply signal is transmitted on at least two time units, the power supply signal is transmitted repeatedly on the at least two time units.

15. The method of any one of claims 12 to 14, wherein in a case that the mode indication information comprises the defined downlink channel or the defined uplink channel, an information source used in a channel coding process comprises any one of: a randomly generated data signal or a data signal for service transmission.

16. The method of any one of claims 2 to 15, wherein in a case that the synchronization indication information is configured to instruct the power supply device to transmit the synchronization signal, the synchronization indication information comprises any one of: a starting transmission time of the synchronization signal, or a sequence length of the synchronization signal.

17. The method of claim 16, wherein the power supply device transmits the synchronization signal within a transmission time period of the power supply signal; or the power supply device transmits the synchronization signal after the transmission time period of the power supply signal.

18. The method of any one of claims 2 to 17, wherein the identification indication information comprises any one of: an identifier (ID) or a Radio Network Temporary Identity (RNTI).

19. The method of claim 18, wherein the ID or the RNTI is pre-configured by the network device.

20. The method of any one of claims 2 to 19, wherein in a case that the first indication information is configured to indicate configuration related to at least one power supply signal, the first indication information comprises at least one of:
respective time indication information corresponding to each of the at least one power supply signal;
respective frequency indication information corresponding to each of the at least one power supply signal;
respective beam indication information corresponding to each of the at least one power supply signal;
respective power indication information corresponding to each of the at least one power supply signal;
respective waveform indication information corresponding to each of the at least one power supply signal;
respective mode indication information corresponding to each of the at least one power supply signal;
respective synchronization indication information corresponding to each of the at least one power supply signal; or
respective identification indication information corresponding to each of the at least one power supply signal.

21. The method of any one of claims 1 to 20, wherein the first indication information is carried in at least one of: Radio Resource Control (RRC) signaling, Medium Access Control Control Element (MAC CE) or Downlink Control Information (DCI).

22. The method of any one of claims 1 to 21, wherein the first indication information is further configured to instruct a power supply device to transmit the power supply signal to the zero-power device.

23. The method of claim 22, wherein in a case that the power supply device is in a Radio Resource Control (RRC) idle state or an RRC inactive state, the first indication information is carried in any one of: Downlink Control Information (DCI) for scheduling a Physical Downlink Shared Channel (PDSCH) carrying a paging message, or the PDSCH carrying the paging message.

24. The method of any one of claims 1 to 21, wherein after the first indication information, the method further comprises:
sending first trigger information, wherein the first trigger information is configured to instruct a power supply device to transmit the power supply signal to the zero-power terminal.

25. The method of claim 24, wherein in a case that the power supply device is in a Radio Resource Control (RRC) idle state or an RRC inactive state, the first trigger information is carried in any one of: Downlink Control Information (DCI) for scheduling a Physical Downlink Shared Channel (PDSCH) carrying a paging message, or the PDSCH carrying the paging message.

26. The method of claim 25, wherein the PDSCH carrying the paging message carries a paging record list, and the paging record list comprises at least one device identifier of at least one device to be paged, and
the first trigger information is further configured to indicate the power supply device, which transmits the power supply signal to the zero-power terminal, of the at least one device to be paged.

27. The method of claim 25 or 26, wherein the first trigger information is further configured to indicate an index of the power supply signal.

28. The method of claim 24, wherein in a case that the power supply device is in a Radio Resource Control (RRC) connection state, the first trigger information is carried in any one of: Downlink Control Information (DCI), RRC signaling, or Medium Access Control Control Element (MAC CE).

29. The method of claim 28, wherein the DCI is defined DCI, and the defined DCI comprises: DCI for scheduling a Physical Downlink Shared Channel (PDSCH), and DCI for scheduling a Physical Uplink Shared Channel (PUSCH).

30. The method of claim 28, wherein the DCI is newly defined DCI except defined DCI, and the defined DCI comprises: DCI for scheduling a Physical Downlink Shared Channel (PDSCH), and DCI for scheduling a Physical Uplink Shared Channel (PUSCH), wherein the method further comprises:
sending second indication information, wherein the second indication information is configured to indicate configuration related to the DCI.

31. The method of claim 30, wherein the second indication information comprises at least one of: a search space corresponding to the DCI, a load size of the DCI, or a Radio Network Temporary Identity (RNTI) for scrambling the DCI.

32. An information transmission method, performed by a power supply device, comprising:
receiving first indication information, wherein the first indication information is configured to indicate configuration related to a power supply signal, and the power supply signal is configured to supply power to a zero-power terminal.

33. The method of claim 32, wherein the first indication information comprises at least one of:
time indication information, configured to indicate transmission time configuration of the power supply signal;
frequency indication information, configured to indicate transmission frequency configuration of the power supply signal;
beam indication information, configured to indicate transmission beam configuration of the power supply signal;
power indication information, configured to indicate transmission power configuration of the power supply signal;
waveform indication information, configured to indicate waveform configuration of the power supply signal;
mode indication information, configured to indicate implementation mode configuration of the power supply signal;
synchronization indication information, configured to indicate transmission configuration of a synchronization signal corresponding to the power supply signal; or
identification indication information, configured to indicate a power supply device corresponding to the configuration related to the power supply signal.

34. The method of claim 33, wherein the time indication information comprises at least one of: a starting transmission time, an ending transmission time, a transmission duration, a transmission cycle, a respective starting transmission time of each cycle, a respective ending transmission time of each cycle, or a respective transmission duration of each cycle.

35. The method of claim 33 or 34, wherein the frequency indication information comprises at least one of: frequency point information or bandwidth information.

36. The method of claim 35, wherein the frequency point information is configured to indicate any one of: a frequency point position of the power supply signal, or a relative positional relationship between the frequency point position of the power supply signal and an operating frequency band of zero-power communication.

37. The method of any one of claims 33 to 36, wherein the beam indication information comprises at least one of: a transmission beam direction or a transmission beam pattern.

38. The method of claim 37, wherein the transmission beam direction or the transmission beam pattern is configured to indicate any one of: omnidirectional transmission of the power supply signal, sector transmission of the power supply signal, or beam scanning transmission of the power supply signal.

39. The method of any one of claims 33 to 38, wherein the power indication information comprises at least one of: transmission power information or power adjustment information.

40. The method of claim 39, wherein the power adjustment information is configured to indicate at least one of:
a power adjustment of transmission power for transmitting the power supply signal this time relative to transmission power for transmitting the power supply signal last time; or
a power offset of transmission power for transmitting the power supply signal to a zero-power terminal at a first position relative to transmission power for transmitting the power supply signal to a zero-power terminal at a reference position.

41. The method of any one of claims 33 to 40, wherein the waveform indication information comprises any one of: a sine wave, a square wave, a sawtooth wave, or a triangular wave.

42. The method of claim 41, wherein in a case that the waveform indication information comprises the square wave, the waveform indication information further comprises a duty cycle of the square wave.

43. The method of any one of claims 33 to 42, wherein the mode indication information comprises any one of: a defined downlink signal, a defined downlink channel, a defined uplink signal, or a defined uplink channel.

44. The method of claim 43, wherein
the defined downlink signal comprises any one of: a Synchronization Signal Block (SSB), a Positioning Reference Signal (PRS), or a Channel-State Information Reference Signal (CSI-RS);
the defined downlink channel comprises any one of: a Physical Downlink Control Channel (PDCCH) or a Physical Downlink Shared Channel (PDSCH);
the defined uplink signal comprises any one of: a Sounding Reference Signal (SRS) or a Demodulation Reference Signal (DMRS); and
the defined uplink channel comprises any one of: a Physical Random Access Channel (PRACH), a Physical Uplink Control Channel (PUCCH), or a Physical Uplink Shared Channel (PUSCH).

45. The method of claim 43 or 44, wherein in a case that the power supply signal is transmitted on at least two time units, the power supply signal is transmitted repeatedly on the at least two time units.

46. The method of any one of claims 43 to 45, wherein in a case that the mode indication information comprises the defined downlink channel or the defined uplink channel, an information source used in a channel coding process comprises any one of: a randomly generated data signal or a data signal for service transmission.

47. The method of any one of claims 33 to 46, wherein in a case that the synchronization indication information is configured to instruct the power supply device to transmit the synchronization signal, the synchronization indication information comprises any one of: a starting transmission time of the synchronization signal, or a sequence length of the synchronization signal.

48. The method of claim 47, wherein the synchronization signal is transmitted within a transmission time period of the power supply signal; or the synchronization signal is transmitted after the transmission time period of the power supply signal.

49. The method of any one of claims 33 to 48, wherein the identification indication information comprises any one of: an identifier (ID) or a Radio Network Temporary Identity (RNTI).

50. The method of claim 49, wherein the ID or the RNTI is pre-configured by a network device.

51. The method of any one of claims 33 to 50, wherein in a case that the first indication information is configured to indicate configuration related to at least one power supply signal, the first indication information comprises at least one of:
respective time indication information corresponding to each of the at least one power supply signal;
respective frequency indication information corresponding to each of the at least one power supply signal;
respective beam indication information corresponding to each of the at least one power supply signal;
respective power indication information corresponding to each of the at least one power supply signal;
respective waveform indication information corresponding to each of the at least one power supply signal;
respective mode indication information corresponding to each of the at least one power supply signal;
respective synchronization indication information corresponding to each of the at least one power supply signal; or
respective identification indication information corresponding to each of the at least one power supply signal.

52. The method of any one of claims 32 to 51, wherein the first indication information is carried in at least one of: Radio Resource Control (RRC) signaling, Medium Access Control Control Element (MAC CE) or Downlink Control Information (DCI).

53. The method of any one of claims 32 to 52, wherein the first indication information is further configured to instruct the power supply device to transmit the power supply signal to the zero-power device.

54. The method of claim 53, wherein in a case that the power supply device is in a Radio Resource Control (RRC) idle state or an RRC inactive state, the first indication information is carried in any one of: Downlink Control Information (DCI) for scheduling a Physical Downlink Shared Channel (PDSCH) carrying a paging message, or the PDSCH carrying the paging message.

55. The method of any one of claims 32 to 52, wherein after receiving the first indication information, the method further comprises:
receiving first trigger information, wherein the first trigger information is configured to instruct the power supply device to transmit the power supply signal to the zero-power terminal.

56. The method of claim 55, wherein in a case that the power supply device is in a Radio Resource Control (RRC) idle state or an RRC inactive state, the first trigger information is carried in any one of: Downlink Control Information (DCI) for scheduling a Physical Downlink Shared Channel (PDSCH) carrying a paging message, or the PDSCH carrying the paging message.

57. The method of claim 56, wherein the PDSCH carrying the paging message carries a paging record list, and the paging record list comprises at least one device identifier of at least one device to be paged, and
the first trigger information is further configured to indicate the power supply device, which transmits the power supply signal to the zero-power terminal, of the at least one device to be paged.

58. The method of claim 56 or 57, wherein the first trigger information is further configured to indicate an index of the power supply signal.

59. The method of claim 55, wherein in a case that the power supply device is in a Radio Resource Control (RRC) connection state, the first trigger information is carried in any one of: Downlink Control Information (DCI), RRC signaling, or Medium Access Control Control Element (MAC CE).

60. The method of claim 59, wherein the DCI is defined DCI, and the defined DCI comprises: DCI for scheduling a Physical Downlink Shared Channel (PDSCH), and DCI for scheduling a Physical Uplink Shared Channel (PUSCH).

61. The method of claim 59, wherein the DCI is newly defined DCI except defined DCI, and the defined DCI comprises: DCI for scheduling a Physical Downlink Shared Channel (PDSCH), and DCI for scheduling a Physical Uplink Shared Channel (PUSCH), wherein the method further comprises:
receiving second indication information, wherein the second indication information is configured to indicate configuration related to the DCI.

62. The method of claim 61, wherein the second indication information comprises at least one of: a search space corresponding to the DCI, a load size of the DCI, or a Radio Network Temporary Identity (RNTI) for scrambling the DCI.

63. An information transmission apparatus, provided in a network device, comprising:
a first sending module, configured to send first indication information, wherein the first indication information is configured to indicate configuration related to a power supply signal, and the power supply signal is configured to supply power to a zero-power terminal.

64. The apparatus of claim 63, wherein the first indication information comprises at least one of:
time indication information, configured to indicate transmission time configuration of the power supply signal;
frequency indication information, configured to indicate transmission frequency configuration of the power supply signal;
beam indication information, configured to indicate transmission beam configuration of the power supply signal;
power indication information, configured to indicate transmission power configuration of the power supply signal;
waveform indication information, configured to indicate waveform configuration of the power supply signal;
mode indication information, configured to indicate implementation mode configuration of the power supply signal;
synchronization indication information, configured to indicate transmission configuration of a synchronization signal corresponding to the power supply signal; or
identification indication information, configured to indicate a power supply device corresponding to the configuration related to the power supply signal.

65. The apparatus of claim 64, wherein the time indication information comprises at least one of: a starting transmission time, an ending transmission time, a transmission duration, a transmission cycle, a respective starting transmission time of each cycle, a respective ending transmission time of each cycle, or a respective transmission duration of each cycle.

66. The apparatus of claim 64 or 65, wherein the frequency indication information comprises at least one of: frequency point information or bandwidth information.

67. The apparatus of claim 66, wherein the frequency point information is configured to indicate any one of: a frequency point position of the power supply signal, or a relative positional relationship between the frequency point position of the power supply signal and an operating frequency band of zero-power communication.

68. The apparatus of any one of claims 64 to 67, wherein the beam indication information comprises at least one of: a transmission beam direction or a transmission beam pattern.

69. The apparatus of claim 68, wherein the transmission beam direction or the transmission beam pattern is configured to indicate any one of: omnidirectional transmission of the power supply signal, sector transmission of the power supply signal, or beam scanning transmission of the power supply signal.

70. The apparatus of any one of claims 64 to 69, wherein the power indication information comprises at least one of: transmission power information or power adjustment information.

71. The apparatus of claim 70, wherein the power adjustment information is configured to indicate at least one of:
a power adjustment of transmission power for transmitting the power supply signal this time relative to transmission power for transmitting the power supply signal last time; or
a power offset of transmission power for transmitting the power supply signal to a zero-power terminal at a first position relative to transmission power for transmitting the power supply signal to a zero-power terminal at a reference position.

72. The apparatus of any one of claims 64 to 71, wherein the waveform indication information comprises any one of: a sine wave, a square wave, a sawtooth wave, or a triangular wave.

73. The apparatus of claim 72, wherein in a case that the waveform indication information comprises the square wave, the waveform indication information further comprises a duty cycle of the square wave.

74. The apparatus of any one of claims 64 to 73, wherein the mode indication information comprises any one of: a defined downlink signal, a defined downlink channel, a defined uplink signal, or a defined uplink channel.

75. The apparatus of claim 74, wherein
the defined downlink signal comprises any one of: a Synchronization Signal Block (SSB), a Positioning Reference Signal (PRS), or a Channel-State Information Reference Signal (CSI-RS);
the defined downlink channel comprises any one of: a Physical Downlink Control Channel (PDCCH) or a Physical Downlink Shared Channel (PDSCH);
the defined uplink signal comprises any one of: a Sounding Reference Signal (SRS) or a Demodulation Reference Signal (DMRS); and
the defined uplink channel comprises any one of: a Physical Random Access Channel (PRACH), a Physical Uplink Control Channel (PUCCH), or a Physical Uplink Shared Channel (PUSCH).

76. The apparatus of claim 74 or 75, wherein in a case that the power supply signal is transmitted on at least two time units, the power supply signal is transmitted repeatedly on the at least two time units.

77. The apparatus of any one of claims 74 to 76, wherein in a case that the mode indication information comprises the defined downlink channel or the defined uplink channel, an information source used in a channel coding process comprises any one of: a randomly generated data signal or a data signal for service transmission.

78. The apparatus of any one of claims 64 to 77, wherein in a case that the synchronization indication information is configured to instruct the power supply device to transmit the synchronization signal, the synchronization indication information comprises any one of: a starting transmission time of the synchronization signal, or a sequence length of the synchronization signal.

79. The apparatus of claim 78, wherein the power supply device transmits the synchronization signal within a transmission time period of the power supply signal; or the power supply device transmits the synchronization signal after the transmission time period of the power supply signal.

80. The apparatus of any one of claims 64 to 79, wherein the identification indication information comprises any one of: an identifier (ID) or a Radio Network Temporary Identity (RNTI).

81. The apparatus of claim 80, wherein the ID or the RNTI is pre-configured by the network device.

82. The apparatus of any one of claims 64 to 81, wherein in a case that the first indication information is configured to indicate configuration related to at least one power supply signal, the first indication information comprises at least one of:
respective time indication information corresponding to each of the at least one power supply signal;
respective frequency indication information corresponding to each of the at least one power supply signal;
respective beam indication information corresponding to each of the at least one power supply signal;
respective power indication information corresponding to each of the at least one power supply signal;
respective waveform indication information corresponding to each of the at least one power supply signal;
respective mode indication information corresponding to each of the at least one power supply signal;
respective synchronization indication information corresponding to each of the at least one power supply signal; or
respective identification indication information corresponding to each of the at least one power supply signal.

83. The apparatus of any one of claims 63 to 82, wherein the first indication information is carried in at least one of: Radio Resource Control (RRC) signaling, Medium Access Control Control Element (MAC CE) or Downlink Control Information (DCI).

84. The apparatus of any one of claims 63 to 83, wherein the first indication information is further configured to instruct a power supply device to transmit the power supply signal to the zero-power device.

85. The apparatus of claim 84, wherein in a case that the power supply device is in a Radio Resource Control (RRC) idle state or an RRC inactive state, the first indication information is carried in any one of: Downlink Control Information (DCI) for scheduling a Physical Downlink Shared Channel (PDSCH) carrying a paging message, or the PDSCH carrying the paging message.

86. The apparatus of any one of claims 63 to 83, wherein the apparatus further comprises:
a second sending module, configured to sending first trigger information, wherein the first trigger information is configured to instruct a power supply device to transmit the power supply signal to the zero-power terminal.

87. The apparatus of claim 86, wherein in a case that the power supply device is in a Radio Resource Control (RRC) idle state or an RRC inactive state, the first trigger information is carried in any one of: Downlink Control Information (DCI) for scheduling a Physical Downlink Shared Channel (PDSCH) carrying a paging message, or the PDSCH carrying the paging message.

88. The apparatus of claim 87, wherein the PDSCH carrying the paging message carries a paging record list, and the paging record list comprises at least one device identifier of at least one device to be paged, and
the first trigger information is further configured to indicate the power supply device, which transmits the power supply signal to the zero-power terminal, of the at least one device to be paged.

89. The apparatus of claim 87 or 88, wherein the first trigger information is further configured to indicate an index of the power supply signal.

90. The apparatus of claim 86, wherein in a case that the power supply device is in a Radio Resource Control (RRC) connection state, the first trigger information is carried in any one of: Downlink Control Information (DCI), RRC signaling, or Medium Access Control Control Element (MAC CE).

91. The apparatus of claim 90, wherein the DCI is defined DCI, and the defined DCI comprises: DCI for scheduling a Physical Downlink Shared Channel (PDSCH), and DCI for scheduling a Physical Uplink Shared Channel (PUSCH).

92. The apparatus of claim 90, wherein the DCI is newly defined DCI except defined DCI, and the defined DCI comprises: DCI for scheduling a Physical Downlink Shared Channel (PDSCH), and DCI for scheduling a Physical Uplink Shared Channel (PUSCH), wherein the apparatus further comprises:
a third sending module, configured to send second indication information, wherein the second indication information is configured to indicate configuration related to the DCI.

93. The apparatus of claim 92, wherein the second indication information comprises at least one of: a search space corresponding to the DCI, a load size of the DCI, or a Radio Network Temporary Identity (RNTI) for scrambling the DCI.

94. An information transmission apparatus, provided in a power supply device, comprising:
a first receiving module, configured to receive first indication information, wherein the first indication information is configured to indicate configuration related to a power supply signal, and the power supply signal is configured to supply power to a zero-power terminal.

95. The apparatus of claim 94, wherein the first indication information comprises at least one of:
time indication information, configured to indicate transmission time configuration of the power supply signal;
frequency indication information, configured to indicate transmission frequency configuration of the power supply signal;
beam indication information, configured to indicate transmission beam configuration of the power supply signal;
power indication information, configured to indicate transmission power configuration of the power supply signal;
waveform indication information, configured to indicate waveform configuration of the power supply signal;
mode indication information, configured to indicate implementation mode configuration of the power supply signal;
synchronization indication information, configured to indicate transmission configuration of a synchronization signal corresponding to the power supply signal; or
identification indication information, configured to indicate a power supply device corresponding to the configuration related to the power supply signal.

96. The apparatus of claim 95, wherein the time indication information comprises at least one of: a starting transmission time, an ending transmission time, a transmission duration, a transmission cycle, a respective starting transmission time of each cycle, a respective ending transmission time of each cycle, or a respective transmission duration of each cycle.

97. The apparatus of claim 95 or 96, wherein the frequency indication information comprises at least one of: frequency point information or bandwidth information.

98. The apparatus of claim 97, wherein the frequency point information is configured to indicate any one of: a frequency point position of the power supply signal, or a relative positional relationship between the frequency point position of the power supply signal and an operating frequency band of zero-power communication.

99. The apparatus of any one of claims 95 to 98, wherein the beam indication information comprises at least one of: a transmission beam direction or a transmission beam pattern.

100. The apparatus of claim 99, wherein the transmission beam direction or the transmission beam pattern is configured to indicate any one of: omnidirectional transmission of the power supply signal, sector transmission of the power supply signal, or beam scanning transmission of the power supply signal.

101. The apparatus of any one of claims 95 to 100, wherein the power indication information comprises at least one of: transmission power information or power adjustment information.

102. The apparatus of claim 101, wherein the power adjustment information is configured to indicate at least one of:
a power adjustment of transmission power for transmitting the power supply signal this time relative to transmission power for transmitting the power supply signal last time; or
a power offset of transmission power for transmitting the power supply signal to a zero-power terminal at a first position relative to transmission power for transmitting the power supply signal to a zero-power terminal at a reference position.

103. The apparatus of any one of claims 95 to 102, wherein the waveform indication information comprises any one of: a sine wave, a square wave, a sawtooth wave, or a triangular wave.

104. The apparatus of claim 103, wherein in a case that the waveform indication information comprises the square wave, the waveform indication information further comprises a duty cycle of the square wave.

105. The apparatus of any one of claims 95 to 104, wherein the mode indication information comprises any one of: a defined downlink signal, a defined downlink channel, a defined uplink signal, or a defined uplink channel.

106. The apparatus of claim 105, wherein
the defined downlink signal comprises any one of: a Synchronization Signal Block (SSB), a Positioning Reference Signal (PRS), or a Channel-State Information Reference Signal (CSI-RS);
the defined downlink channel comprises any one of: a Physical Downlink Control Channel (PDCCH) or a Physical Downlink Shared Channel (PDSCH);
the defined uplink signal comprises any one of: a Sounding Reference Signal (SRS) or a Demodulation Reference Signal (DMRS); and
the defined uplink channel comprises any one of: a Physical Random Access Channel (PRACH), a Physical Uplink Control Channel (PUCCH), or a Physical Uplink Shared Channel (PUSCH).

107. The apparatus of claim 105 or 106, wherein in a case that the power supply signal is transmitted on at least two time units, the power supply signal is transmitted repeatedly on the at least two time units.

108. The apparatus of any one of claims 105 to 107, wherein in a case that the mode indication information comprises the defined downlink channel or the defined uplink channel, an information source used in a channel coding process comprises any one of: a randomly generated data signal or a data signal for service transmission.

109. The apparatus of any one of claims 105 to 108, wherein in a case that the synchronization indication information is configured to instruct the power supply device to transmit the synchronization signal, the synchronization indication information comprises any one of: a starting transmission time of the synchronization signal, or a sequence length of the synchronization signal.

110. The apparatus of claim 109, wherein the synchronization signal is transmitted within a transmission time period of the power supply signal; or the synchronization signal is transmitted after the transmission time period of the power supply signal.

111. The apparatus of any one of claims 95 to 110, wherein the identification indication information comprises any one of: an identifier (ID) or a Radio Network Temporary Identity (RNTI).

112. The apparatus of claim 111, wherein the ID or the RNTI is pre-configured by a network device.

113. The apparatus of any one of claims 95 to 112, wherein in a case that the first indication information is configured to indicate configuration related to at least one power supply signal, the first indication information comprises at least one of:
respective time indication information corresponding to each of the at least one power supply signal;
respective frequency indication information corresponding to each of the at least one power supply signal;
respective beam indication information corresponding to each of the at least one power supply signal;
respective power indication information corresponding to each of the at least one power supply signal;
respective waveform indication information corresponding to each of the at least one power supply signal;
respective mode indication information corresponding to each of the at least one power supply signal;
respective synchronization indication information corresponding to each of the at least one power supply signal; or
respective identification indication information corresponding to each of the at least one power supply signal.

114. The apparatus of any one of claims 94 to 113, wherein the first indication information is carried in at least one of: Radio Resource Control (RRC) signaling, Medium Access Control Control Element (MAC CE) or Downlink Control Information (DCI).

115. The apparatus of any one of claims 94 to 114, wherein the first indication information is further configured to instruct the power supply device to transmit the power supply signal to the zero-power device.

116. The apparatus of claim 115, wherein in a case that the power supply device is in a Radio Resource Control (RRC) idle state or an RRC inactive state, the first indication information is carried in any one of: Downlink Control Information (DCI) for scheduling a Physical Downlink Shared Channel (PDSCH) carrying a paging message, or the PDSCH carrying the paging message.

117. The apparatus of any one of claims 94 to 114, wherein the apparatus further comprises:
a second receiving module, configured to receive first trigger information, wherein the first trigger information is configured to instruct the power supply device to transmit the power supply signal to the zero-power terminal.

118. The apparatus of claim 117, wherein in a case that the power supply device is in a Radio Resource Control (RRC) idle state or an RRC inactive state, the first trigger information is carried in any one of: Downlink Control Information (DCI) for scheduling a Physical Downlink Shared Channel (PDSCH) carrying a paging message, or the PDSCH carrying the paging message.

119. The apparatus of claim 118, wherein the PDSCH carrying the paging message carries a paging record list, and the paging record list comprises at least one device identifier of at least one device to be paged, and
the first trigger information is further configured to indicate the power supply device, which transmits the power supply signal to the zero-power terminal, of the at least one device to be paged.

120. The apparatus of claim 118 or 119, wherein the first trigger information is further configured to indicate an index of the power supply signal.

121. The apparatus of claim 117, wherein in a case that the power supply device is in a Radio Resource Control (RRC) connection state, the first trigger information is carried in any one of: Downlink Control Information (DCI), RRC signaling, or Medium Access Control Control Element (MAC CE).

122. The apparatus of claim 121, wherein the DCI is defined DCI, and the defined DCI comprises: DCI for scheduling a Physical Downlink Shared Channel (PDSCH), and DCI for scheduling a Physical Uplink Shared Channel (PUSCH).

123. The apparatus of claim 121, wherein the DCI is newly defined DCI except defined DCI, and the defined DCI comprises: DCI for scheduling a Physical Downlink Shared Channel (PDSCH), and DCI for scheduling a Physical Uplink Shared Channel (PUSCH), wherein the apparatus further comprises:
a third receiving module, configured to receive second indication information, wherein the second indication information is configured to indicate configuration related to the DCI.

124. The apparatus of claim 123, wherein the second indication information comprises at least one of: a search space corresponding to the DCI, a load size of the DCI, or a Radio Network Temporary Identity (RNTI) for scrambling the DCI.

125. A network device, comprising: a processor and a transceiver connected to the processor,
wherein the transceiver is configured to send first indication information, wherein the first indication information is configured to indicate configuration related to a power supply signal, and the power supply signal is configured to supply power to a zero-power terminal.

126. A power supply device, comprising: a processor and a transceiver connected to the processor,
wherein the transceiver is configured to receive first indication information, wherein the first indication information is configured to indicate configuration related to a power supply signal, and the power supply signal is configured to supply power to a zero-power terminal.

127. A computer-readable storage medium, having stored thereon a computer program that is executed by a processor of a network device to implement the information transmission method of any one of claims 1 to 31.

128. A computer-readable storage medium, having stored thereon a computer program that is executed by a processor of a power supply device to implement the information transmission method of any one of claims 32 to 62.

129. A chip comprising a programmable logic circuit and/or program instructions that, when the chip runs on a network device, implement the information transmission method of any one of claims 1 to 31.

130. A chip comprising a programmable logic circuit and/or program instructions that, when the chip runs on a power supply device, implement the information transmission method of any one of claims 32 to 62.

131. A computer program product that, when running on a network device, implements the information transmission method of any one of claims 1 to 31.

132. A computer program product that, when running on a power supply device, implements the information transmission method of any one of claims 32 to 62.
